# EUROPEAN PATENT SPECIFICATION

(11) **EP 4 404 682 B1**
(45) Date of publication and mention of the grant of the patent: **12.11.2025**
(21) Application number: 23818837.9
(22) Date of filing: 23.04.2023
(51) Int. Cl.: H04W 76/14, H04W 76/15, H04W 76/23, H04W 76/30, H04W 84/12

(54) **DATA TRANSMISSION MANAGEMENT METHOD, ELECTRONIC DEVICE AND COMPUTER-READABLE STORAGE MEDIUM**
VERFAHREN ZUR VERWALTUNG VON DATENÜBERTRAGUNG, ELEKTRONISCHE VORRICHTUNG UND COMPUTERLESBARES SPEICHERMEDIUM
PROCÉDÉ DE GESTION DE TRANSMISSION DE DONNÉES, DISPOSITIF ÉLECTRONIQUE ET SUPPORT DE STOCKAGE LISIBLE PAR ORDINATEUR

(30) Priority: 11.06.2022 CN 202210658493
(43) Date of publication of application: 24.07.2024
(73) Proprietor: Honor Device Co., Ltd., Shenzhen, Guangdong 518040 (CN)
(72) Inventor: ZHANG, Zhongli, Shenzhen, Guangdong 518040 (CN); WANG, Ping, Shenzhen, Guangdong 518040 (CN)
(74) Representative: Isarpatent
(86) International application number: PCT/CN2023/090084
(87) International publication number: WO 2023/236670

(56) References cited:
- EP-A1- 3 697 054
- CN-A- 112 929 972
- CN-A- 112 969 081
- CN-A- 113 645 693
- CN-A- 113 676 902
- CN-A- 114 390 337
- CN-A- 114 598 414
- US-A1- 2020 107 222
- US-A1- 2020 260 513

## Description

This application claims priority to Chinese Patent Application No. 202210658493.2, filed with the China National Intellectual Property Administration on June 11, 2022 and entitled "DATA TRANSMISSION MANAGEMENT METHOD, ELECTRONIC DEVICE, AND STORAGE MEDIUM".

### TECHNICAL FIELD

This application relates to the field of intelligent terminal technologies, and in particular, to a data transmission management method, a first electronic device, and a computer-readable storage medium.

### BACKGROUND

Based on a distributed technology, a multi-screen collaboration function can implement cross-system and cross-device collaboration. Through the multi-screen collaboration function, after one electronic device establishes a collaboration connection to another electronic device, resources can be rapidly shared. Collaboration control operations of operating a mobile phone, browsing an interface of the mobile phone, answering audio and video calling of the mobile phone, and the like may be performed on a tablet/computer by using a computing power and a professional system capability of the tablet/computer. However, due to a limitation of device performance of the electronic device, data transmission performance in a multi-screen collaborative system (for example, data transmission performance between electronic devices and data transmission performance between an electronic device and an access point device) may be relatively poor.

CN 112969081 A describes a television split screen projection method and system and an intelligent television, and the method comprises the steps: judging whether the intelligent television is networked through WIFI or not after the intelligent television is started; if the smart television cannot be connected with the router to surf the internet, the smart television receives screen projection of the smart phone on the first screen and surfs the internet on the second screen through an internet access AP mode provided by the smart phone; and if the smart television completes networking through WIFI, the smart television switches the frequency to the frequency of the smart phone and then is reconnected with the router, online video playing is carried out on the first screen, and screen projection operation of the smart phone is completed on the second screen. According to the disclosure, screen projection of the smart phone can be completed in the split-screen mode of the smart television, and video can be played through synchronous networking, or screen projection can be carried out through the smart phone when the smart television is not networked, and the smart phone can share the Internet through the AP mode of the smart phone at the same time, so that the use experience of a user is expanded.

EP 3 697 054 A1 describes a method for data transmission and related products are provided. The method is applicable to an electronic device. A first wireless-fidelity (Wi-Fi) link and at least one second Wi-Fi link are established between the electronic device and at least one terminal. The first Wi-Fi link is operable in a station mode and each second Wi-Fi link is operable in a soft AP mode. The method includes the following. Data transmission is performed with the at least one terminal over the first Wi-Fi link and the at least one second Wi-Fi link simultaneously, where a transmission frequency band for data transmission over the first Wi-Fi link is different from a transmission frequency band for data transmission over each of any two links of the at least one second Wi-Fi link.

A further document of the prior art is US 2020/260513 A1.

### SUMMARY

In view of the foregoing, it is an object of the present invention to provide a data transmission management method, a first electronic device, and a computer-readable storage medium, to resolve a problem of relatively poor data transmission caused by a DBAC scenario (DBSC scenario). This object is solved by the subject-matter of the appended independent claims, wherein further embodiments are set out in the dependent claims.

According to a first aspect, an embodiment of this application provides a data transmission management method, performed by a first electronic device, where a first link being a Wi-Fi link exists between the first electronic device and a wireless access point, and the method includes: determining, in response to a user operation triggering a multi-screen collaboration, a second electronic device that performs data transmission with the first electronic device, where a second link being a Wi-Fi link exists between the second electronic device and the wireless access point; establishing a third link being a P2P link and configured to perform data transmission with the second electronic device. The data transmission management method comprises further features as specified in claim 1.

According to the technical solution, a conventional networking mode can be changed, data transmission performance of a system constructed by the first electronic device and the second electronic device is improved, and efficiency of data transmission between the first electronic device and the second electronic device is improved.

At least one electronic device of the first electronic device and the second electronic device does not have a first capability. When both the first electronic device and the second electronic device have the first capability and transmission performance is good, the conventional networking mode may not be changed; and when the first electronic device or the second electronic device does not have the first capability, the conventional networking mode is changed as according to the claimed invention, and the transmission performance can be improved.

At least one frequency band of a frequency band in which the first link is located and a frequency band in which the second link is located is the preset frequency band. According to the technical solution, whether the conventional networking mode is changed is further determined according to the frequency bands in which the first link and the second link are located, so that a made decision can be more accurate.

The first capability is a dual band dual concurrent capability.

In an implementation, that there is no first capability includes performing transmission in a dual band adaptive concurrent manner.

In an implementation, the preset frequency band is 2.4 GHz, and the frequency band in which the third link is located is 5 GHz.

The third link is a P2P link.

Establishing a fourth link connected to the second electronic device and maintaining the first link according to independent claim 1 includes: when the first electronic device has the first capability and the second electronic device does not have the first capability, or when neither the first electronic device nor the second electronic device has the first capability and a theoretical peak rate of the second electronic device is less than a theoretical peak rate of the first electronic device, establishing the fourth link connected to the second electronic device and maintaining the first link. According to the technical solution, it can be accurately determined whether the fourth link connected to the second electronic device is established and the first link is maintained, and a quantity of electronic devices that work in a dual band adaptive concurrent model in a data transmission scenario can be effectively reduced.

The establishing a fourth link connected to the second electronic device and disconnecting the first link according to independent claim 1 includes: when the first electronic device does not have the first capability and the second electronic device has the first capability, or when neither the first electronic device nor the second electronic device has the first capability and a theoretical peak rate of the second electronic device is greater than a theoretical peak rate of the first electronic device, establishing the fourth link connected to the second electronic device and disconnecting the first link. According to the technical solution, it can be accurately determined whether the fourth link connected to the second electronic device is established and the first link is disconnected, and a quantity of electronic devices that work in a dual band adaptive concurrent model in a data transmission scenario can be effectively reduced.

In an implementation, after the establishing a fourth link connected to the second electronic device and disconnecting the first link, the method further includes: if the frequency band in which the second link is located is the same as the frequency band in which the third link is located and a channel on which the second link works is different from a channel on which the third link works, switching the channel on which the second link works, where a switched channel of the second link is the same as the channel of the third link. According to the technical solution, intra-frequency inter-channel between the second link and the third link is changed into intra-frequency co-channel, and data transmission efficiency can be further improved.

In an implementation, the method further includes: determining the second electronic device as a group owner, where the group owner is configured to initiate switching of the channel on which the second link works. According to the technical solution, the second electronic device used as a simulation router is determined as the group owner, so that it can be conveniently determined whether a current system is intra-frequency inter-channel, thereby improving a speed of determining whether to perform channel switching.

In an implementation, after the establishing a fourth link connected to the second electronic device and maintaining the first link, the method further includes: if the frequency band in which the first link is located is the same as the frequency band in which the third link is located and a channel on which the first link works is different from a channel on which the third link works, switching the channel on which the first link works, where a switched channel of the first link is the same as the channel of the third link. According to the technical solution, intra-frequency inter-channel between the first link and the third link is changed into intra-frequency co-channel, and data transmission efficiency can be further improved.

In an implementation, the method further includes: determining the first electronic device as a group owner, where the group owner is configured to initiate switching of the channel on which the first link works. According to the technical solution, the first electronic device used as a simulation router is determined as the group owner, so that it can be conveniently determined whether a current system is intra-frequency inter-channel, thereby improving a speed of determining whether to perform channel switching.

According to a second aspect, an embodiment of this application provides a first electronic device as according to independent claim 8, including a memory and a processor, where the memory is configured to store program instructions; and the processor is configured to read the program instructions stored in the memory, to implement the foregoing data transmission management method.

According to a third aspect, an embodiment of this application provides a computer-readable storage medium as according to independent claim 9. The computer-readable storage medium stores computer-readable instructions, and the computer-readable instructions, when executed by a processor, implement the foregoing data transmission management method.

In addition, the technical effect brought by second aspect and the third aspect can be found in the related description of the method of each design of the foregoing method part, and details are not described herein again.

### BRIEF DESCRIPTION OF DRAWINGS

FIG. 1 is a schematic diagram of a scenario of a multi-screen collaborative system;
FIG. 2 is a schematic diagram of a scenario of a multi-screen collaborative system;
FIG. 3 is a schematic diagram of a scenario of a multi-screen collaborative system;
FIG. 4 is a schematic diagram of a status of an electronic device;
FIG. 5 is a schematic diagram of data transmission of an electronic device;
FIG. 6 is a schematic diagram of a scenario of a multi-screen collaborative system;
FIG. 7A and FIG. 7B are a schematic flowchart of a data transmission management method according to an embodiment of this application;
FIG. 8 is a schematic diagram of a multi-screen collaborative system; embodiment of this application;
FIG. 9 is a schematic diagram of a multi-screen collaborative system;
FIG. 10 is a schematic diagram of a multi-screen collaborative system;
FIG. 11A and FIG. 11B are a schematic flowchart of a data transmission management method; and
FIG. 12 is a schematic structural diagram of an electronic device according to an embodiment of this application.

### DESCRIPTION OF EMBODIMENTS

The terms "first" and "second" mentioned below are merely intended for a purpose of description, and shall not be understood as an indication or implication of relative importance or implicit indication of the quantity of indicated technical features. Therefore, a feature defined by "first" or "second" can explicitly or implicitly includes one or more features. In descriptions of embodiments of this application, words such as "example" or "for example" are used to represent giving examples, illustrations, or descriptions. Any embodiment or design solution described by using "exemplary" or "for example" in embodiments of this application should not be explained as being more preferred or having more advantages than another embodiment or design solution. Exactly, use of the term such as "exemplary" or "for example" is intended to present a related concept in a specific manner.

Unless otherwise defined, meanings of all technical and scientific terms used in this specification are the same as those usually understood by a person skilled in the art to which this application belongs. Terms used in the specification of this application are merely intended to describe objectives of the specific embodiments, but are not intended to limit this application. It should be understood that in this application, "/" means "or" unless otherwise specified. For example, A/B may represent A or B. In this application, "and/or" describes only an association relationship for describing associated objects and indicates that three relationships may exist. For example, A/B may indicate the following three cases: Only A exists, both A and B exist, and only B exists. "At least one" means one or more. "A plurality of" means two or more. For example, at least one of a, b, or c may indicate seven cases: a, b, c, a and b, a and c, b and c, and a, b, and c. It should be understood that the order of the steps shown in the flowcharts herein may be changed and some may be omitted.

Based on a distributed technology, a multi-screen collaboration function can implement cross-system and cross-device collaboration. Through the multi-screen collaboration function, after one electronic device establishes a collaboration connection to another electronic device, resources can be rapidly shared.

It may be understood that the electronic device in this application may be a mobile phone, a tablet computer, a desktop computer, a laptop computer, a handheld computer, a laptop, an ultra-mobile personal computer (ultra-mobile personal computer, UMPC), a netbook, a cellular phone, a personal digital assistant (personal digital assistant, PDA), an artificial intelligence (artificial intelligence, AI) device, a wearable device, a vehicle-mounted device, a smart home device, and/or a smart city device, and other electronic devices. No special limitation is imposed on a specific form of the electronic device in this embodiment of this application.

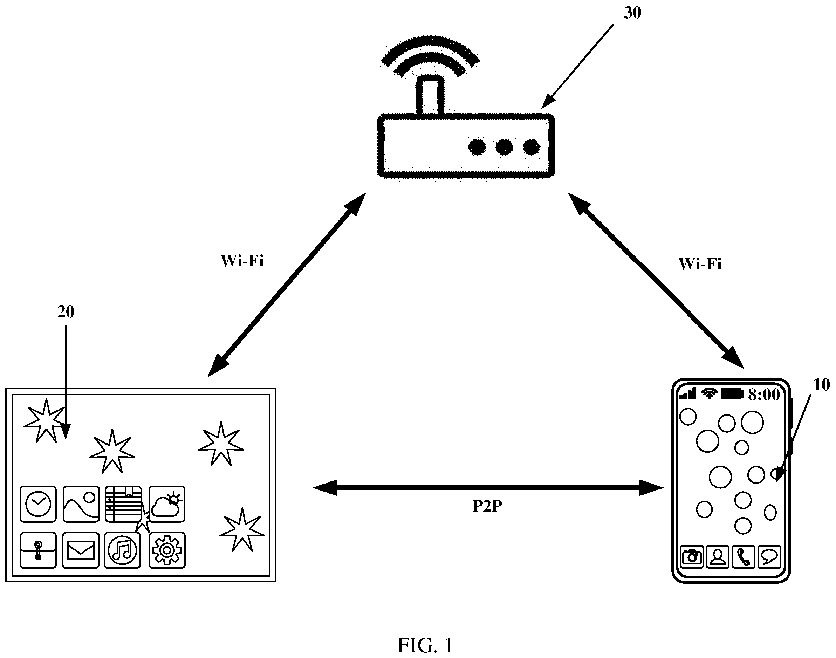

Collaboration may be established between the two electronic devices through a peer-to-peer networking (peer-to-peer networking, P2P) connection for communication. When collaboration is established, each electronic device, as a station (Station, STA), may be connected to a wireless local area network (Wireless Local Area Network, WLAN) through a wireless access point (AccessPoint, AP, for example, a router) to access the Internet. For example, as shown in FIG. 1, FIG. 1 is a schematic diagram of a scenario of a multi-screen collaborative system (the wording of the claims encompasses a first electronic device, but not a multi-screen collaborative system). In FIG. 1, a mobile phone 10, a tablet computer 20, and a router 30 form a multi-screen collaborative system. The mobile phone 10 and the tablet computer 20 establish collaboration to communicate with each other (communicate with each other through a P2P link), and the router 30 respectively provides wireless communication networks to the mobile phone 10 and the tablet computer 20 through wireless communication links (Wireless Fidelity links, Wi-Fi links). However, due to a limitation of device performance of the electronic device, data transmission performance in the multi-screen collaborative system (for example, data transmission performance between electronic devices and data transmission performance between an electronic device and an access point device) may be relatively poor.

Performance of a wireless communication technology (Wireless Fidelity, Wi-Fi) module of the electronic device is determined by a hardware structure of the electronic device. Wi-Fi includes two frequency bands 2.4 GHz and 5 GHz. The Wi-Fi module may work on the two frequency bands 2.4 GHz and/or 5 GHz. The hardware structure includes at least a baseband processing module, a radio frequency (RadioFrequency, RF) front end, and the like. The baseband processing module may be configured to support the Wi-Fi module in working on different frequency bands, and the RF front end may be configured to send and receive signals, for example, send and receive signals of the Wi-Fi module on the 2.4 GHz frequency band and send and receive signals of the Wi-Fi module on the 5 GHz frequency band.

A general hardware structure of the electronic device includes two complete baseband processing modules and one RF front end. A case that the electronic device performs data transmission by using the two baseband processing modules and the RF front end (the RF front end switches the frequency bands according to division of time slices) is referred to as a dual band single concurrent (Dual Band Single Concurrent, DBSC) mode, or may be referred to as a dual band adaptive concurrent (Dual Band Adaptive Concurrent, DBAC). An example of the DBAC mode is used for description below. For example, the two baseband processing modules may respectively support the Wi-Fi module in working on the 2.4 GHz frequency band and working on the 5 GHz frequency band. The RF front end may select a frequency band to work, to implement data transmission on a single frequency band. For example, the RF front end may select to work on the 2.4 GHz frequency band for data transmission or may select to work on the 5 GHz frequency band for data transmission. Because the electronic device has only one RF front end, the electronic device can select to work on only frequency band for data transmission in a same time period. The electronic device may change a frequency band for data transmission through frequency band switching of the RF front end (according to division of time slices). Through frequency band switching of the RF front end, dual band data transmission of different time division can be implemented, and such a case of data transmission is referred to as the DBAC mode. For example, a case that an electronic device performs data transmission is the DBAC mode (which is referred to as an electronic device in the DBAC mode below). When performing data transmission on the 5 GHz frequency band, the electronic device may perform data transmission on the 2.4 GHz frequency band through frequency band switching of the RF front end, to implement dual band data transmission of different time division. Hardware structures of some electronic devices may include two complete baseband processing modules and two RF front ends. A case that the electronic device performs data transmission by using the two baseband processing modules and the two RF front ends is referred to as a dual band dual concurrent (Dual Band Dual Concurrent, DBDC) mode (which is referred to as an electronic device in the DBDC mode below). The two baseband processing modules may respectively support the Wi-Fi module in working on the 2.4 GHz frequency band and working on the 5 GHz frequency band. The two RF front ends respectively select to work on the 2.4 GHz frequency band for data transmission and work on the 5 GHz frequency band for data transmission, to implement dual band data transmission of same time division. That is, an electronic device is in the DBDC mode. Because the electronic device has two RF front ends, the electronic device may simultaneously work on the 2.4 GHz frequency band and the 5 GHz frequency band for data transmission, to implement dual band data transmission of same time division.

The 2.4 GHz frequency band has the characteristics of strong wall penetration capability. To ensure signal stability, a single-band router on the market usually supports working on only the 2.4 GHz frequency band. In this case, the electronic device performs data transmission with the single-band router on the 2.4 GHz frequency band, to connect to the WLAN to access the Internet. A dual-band router on the market supports working on both the 2.4 GHz frequency band and the 5 GHz frequency band. In this case, the electronic device may select to perform data transmission with the dual-band router on the 2.4 GHz frequency band or may select to perform data transmission with the dual-band router on the 5 GHz frequency band. However, because coverage of the 2.4 GHz frequency band is larger than coverage of the 5 GHz frequency band, and in all coverage regions of the dual-band router, a range that is not covered by the 5 GHz frequency band is relatively large, in the multi-screen collaborative system formed with the electronic device, the electronic device may perform data transmission with the dualband router on the 2.4 GHz frequency band or the 5 GHz frequency band, to connect to the WLAN to access the Internet.

Because the 5 GHz frequency band has the characteristics of high transmission efficiency, data transmission may be performed between the two electronic devices that establish the collaboration connection on the 5 GHz frequency band.

According to the foregoing analysis, in the multi-screen collaborative system, data transmission may be performed between two electronic devices that establish collaboration on the 5 GHz frequency band, and each electronic device in the two electronic devices may perform data transmission with the router on the 2.4 GHz frequency band or the 5 GHz frequency band.

If a frequency band on which data transmission is performed between electronic devices in a multi-screen collaborative system is different from a frequency band on which data transmission is performed between an electronic device and a router, a data transmission case of the multi-screen collaborative system is referred to as inter-frequency inter-channel. If a frequency band on which data transmission is performed between electronic devices in a multi-screen collaborative system is the same as a frequency band on which data transmission is performed between an electronic device and a router, a data transmission case of the multi-screen collaborative system is referred to as intra-frequency, which may include intra-frequency co-channel and intra-frequency inter-channel. By switching channels, intra-frequency co-channel and intra-frequency inter-channel can be converted to each other. Data transmission efficiency in the intra-frequency co-channel is greater than data transmission efficiency in the intra-frequency inter-channel.

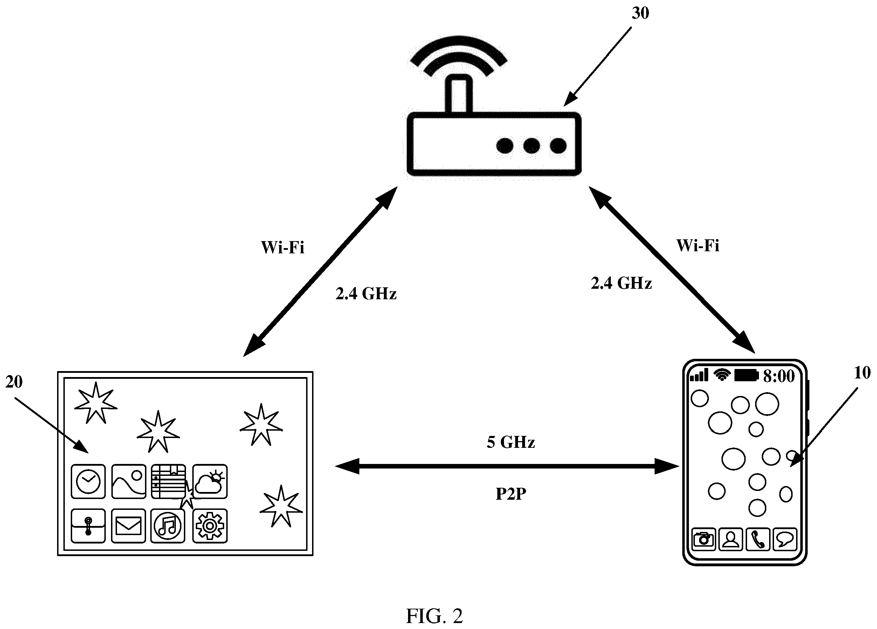

For example, as shown in FIG. 2, in the multi-screen collaborative system, data transmission is performed between the mobile phone 10 and the tablet computer 20 that establish collaboration on the 5 GHz frequency band, data transmission is performed between the mobile phone 10 and the router 30 that establish collaboration or between the tablet computer 20 and the router 30 that establish collaboration on the 2.4 GHz frequency band, and the data transmission case of the multi-screen collaborative system is referred to as inter-frequency inter-channel.

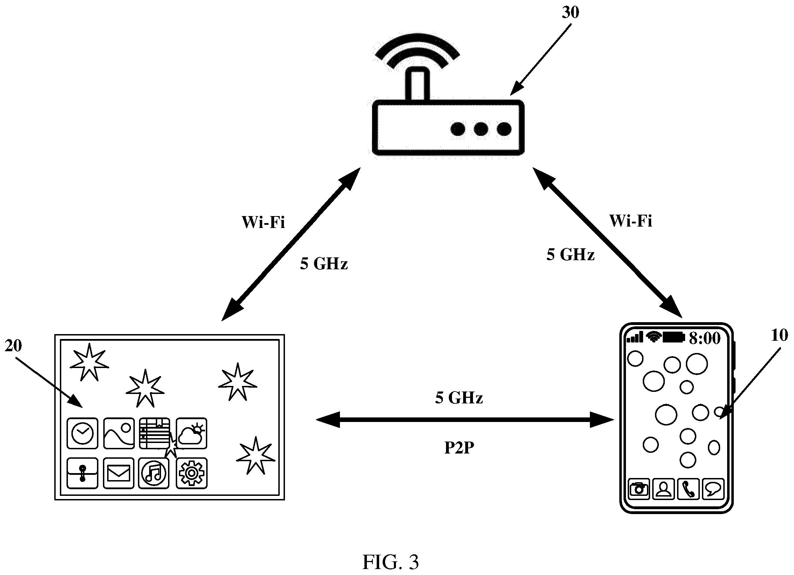

For example, as shown in FIG. 3, in the multi-screen collaborative system, data transmission is performed between the mobile phone 10 and the tablet computer 20 that establish collaboration, between the mobile phone 10 and the router 30 that establish collaboration, and between the tablet computer 20 and the router 30 that establish collaboration on the 5 GHz frequency band, and the data transmission case of the multi-screen collaborative system is referred to as inter-frequency. If all communication channels between the mobile phone 10 and the tablet computer 20, between the mobile phone 10 and the router 30, and between the tablet computer 20 and the router 30 are the same, the data transmission case of the multi-screen collaborative system is referred to as intra-frequency co-channel. Otherwise, the data transmission case of the multi-screen collaborative system is referred to as intra-frequency inter-channel.

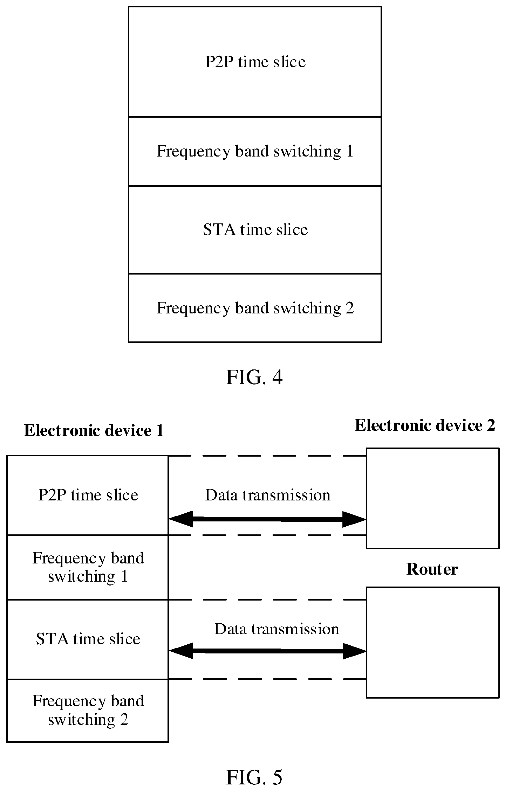

In a case that a data transmission case of a multi-screen collaborative system corresponding to an electronic device having only one RF front end is inter-frequency inter-channel, the electronic device needs to perform data transmission in the DBAC mode. That is, when the data transmission case of the multi-screen collaborative system corresponding to the electronic device having only one RF front end is inter-frequency inter-channel, the electronic device needs to enter the DBAC mode, and continuously switches an operating frequency band of the RF front end in divided different time slices to implement data transmission with the router or implement data transmission with another electronic device. When the electronic device is in the DBAC mode, due to division of time slices, the electronic device may include three states: a P2P time slice state, a frequency band switching state, and a STA time slice state, and the electronic device may be switched among the three states in a specific sequence. The P2P time slice state is used for data transmission between the electronic device and another electronic device that establish collaboration. For example, data transmission may be performed on the 5 GHz frequency band. The STA time slice state is used for data transmission between the electronic device and the router. For example, data transmission may be performed on the 2.4 GHz frequency band. For example, as shown in FIG. 4, it takes a specific switching time for the electronic device to switch from the P2P time slice state to the STA time slice state. During switching, the electronic device is in a frequency band switching state, for example, in a frequency band switching 1 state. It also takes a specific switching time for the electronic device to switch from the STA time slice state to the P2P time slice state. During switching, the electronic device is also in a frequency band switching state, for example, in a frequency band switching 2 state. A time for the electronic device to be in the frequency band switching 1 state may be the same as or different from a time for the electronic device to be in the frequency band switching 2 state. This is not limited herein. Duration of the P2P time slice state and the STA time slice state may be set according to an actual requirement, and may be set to be the same or different. This is not limited herein.

It may be understood that a schematic diagram of a status of the electronic device in FIG. 4 (the diagram of the status is not encompassed by the wording of the claims) is merely an example and does not constitute any limitation. For example, a STA time slice may be earlier than a P2P time slice. In addition, duration of a P2P time slice state, a STA time slice state, a frequency band switching 1 state, and a frequency band switching 2 state in different electronic devices may be the same or different. This is not limited herein.

If an electronic device that establishes collaboration is in the DBAC mode (for example, an electronic device 1) and another electronic device is in the DBDC mode (for example, an electronic device 2) in a multi-screen collaborative system, a data transmission case of the multi-screen collaborative system is inter-frequency inter-channel. As shown in FIG. 5 (the shown states are not encompassed by the wording of the claims), when the electronic device 1 is in the P2P time slice state, data transmission may be performed between the electronic device 1 and the electronic device 2, and data transmission may not be performed between the electronic device 1 and the router. When the electronic device 1 is in the frequency band switching 1 state, data transmission may be performed neither between the electronic device 1 and the electronic device 2 nor between the electronic device 1 and the router. When the electronic device 1 is in the STA time slice state, data transmission may not be performed between the electronic device 1 and the electronic device 2, and data transmission may be performed between the electronic device 1 and the router. When the electronic device 1 is in the frequency band switching 2 state, data transmission may be performed neither between the electronic device 1 and the electronic device 2 nor between the electronic device 1 and the router. Data transmission between the electronic device 2 and the router is not shown in FIG. 5. It may be understood that the electronic device 2 is in the DBDC mode, and the electronic device 2 may work on both the 2.4 GHz frequency band and the 5 GHz frequency band for data transmission. Therefore, the electronic device 2 may implement data transmission with the electronic device 1 and data transmission with the router without performing state switching like the electronic device 1.

That is, when an electronic device that establishes collaboration is in the DBAC mode and another electronic device is in the DBDC mode in a multi-screen collaborative system, only when the electronic device in the DBAC mode is in the P2P time slice state, data transmission can be performed between the two electronic devices, otherwise, data transmission cannot be performed between the two electronic devices. Only when the electronic device in the DBAC model is in the STA time slice state, the electronic device can perform data transmission with the router. In a multi-screen collaborative system established by two electronic devices in different modes, when performing data transmission with the electronic device in the DBAC mode, the router needs to wait until the electronic device in the DBAC mode is in the STA time slice state, that is, when the electronic device in the DBAC mode is in another state (a state rather than the STA time slice state), the router cannot perform data transmission with the electronic device in the DBAC mode. When performing data transmission with the electronic device in the DBAC mode, the electronic device in the DBDC mode needs to wait until the electronic device in the DBAC mode is in the STA time slice state, that is, when the electronic device in the DBAC mode is in another state (a state rather than the STA time slice state), the electronic device in the DBDC mode cannot perform data transmission with the electronic device in the DBAC mode, resulting in relatively poor data transmission efficiency.

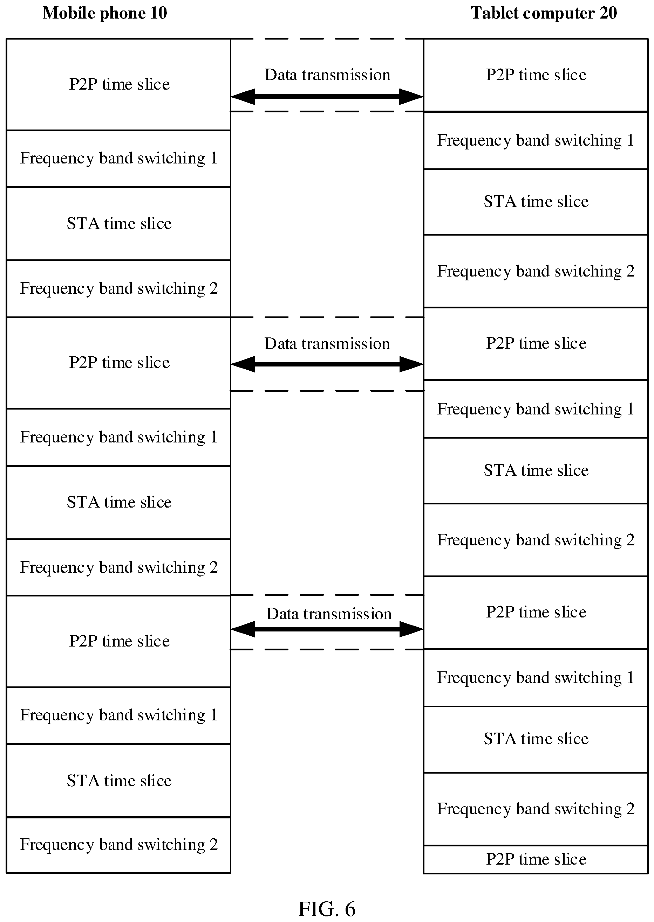

If two electronic devices that establish collaboration in a multi-screen collaborative system are in the DBAC mode, and when a data transmission case of the multi-screen collaborative system is inter-frequency inter-channel and the two electronic devices are in the P2P time slice state, data transmission may be performed between the two electronic devices. For example, as shown in FIG. 6 (the shown states are not encompassed by the wording of the claims), the mobile phone 10 and the tablet computer 20 in a multi-screen collaborative system are in the DBAC mode, and a data transmission case of the multi-screen collaborative system is inter-frequency inter-channel. When the mobile phone 10 and the tablet computer 20 are in the P2P time slice state, data transmission may be performed between the mobile phone 10 and the tablet computer 20. When the mobile phone 10 and the tablet computer 20 are not in the P2P time slice state simultaneously, data transmission may not be performed between the mobile phone 10 and the tablet computer 20. For example, when the mobile phone 10 is in the P2P time slice state and the tablet computer 20 is in the frequency band switching 1 state, data transmission may not be performed between the mobile phone 10 and the tablet computer 20. When the tablet computer 20 is in the P2P time slice state and the mobile phone 10 is in the frequency band switching 2 state, data transmission may not be performed between the mobile phone 10 and the tablet computer 20. It may be understood that when the mobile phone 10 is in the STA time slice state, data transmission may be performed between the mobile phone 10 and the router. When the tablet computer 20 is in the STA time slice state, data transmission may be performed between the tablet computer 20 and the router.

That is, when two electronic devices that establish collaboration in a multi-screen collaborative system are in the DBAC mode, and when a data transmission case of the multi-screen collaborative system is inter-frequency inter-channel, only when the two electronic devices are in the P2P time slice state, data transmission can be performed between the two electronic devices, otherwise, data transmission cannot be performed between the two electronic devices. Only when one electronic device is in the STA time slice state, the electronic device can perform data transmission with the router. In a multi-screen collaborative system established by two electronic devices in the DBAC mode, data transmission cannot be performed for a lot of time, resulting in relatively poor data transmission efficiency.

To resolve the problem of relatively poor data transmission and relatively poor data transmission efficiency caused by the DBAC scenario (the DBSC scenario) in the multi-screen collaborative system, an embodiment of this application provides a data transmission management method, applied to a first electronic device. An access point device provides a wireless communication network to the first electronic device through a first link, and the method can effectively reduce a time when data transmission cannot be performed in the multi-screen collaborative system and improve data transmission efficiency. The data transmission management method is described in detail below with reference to the accompanying drawings.

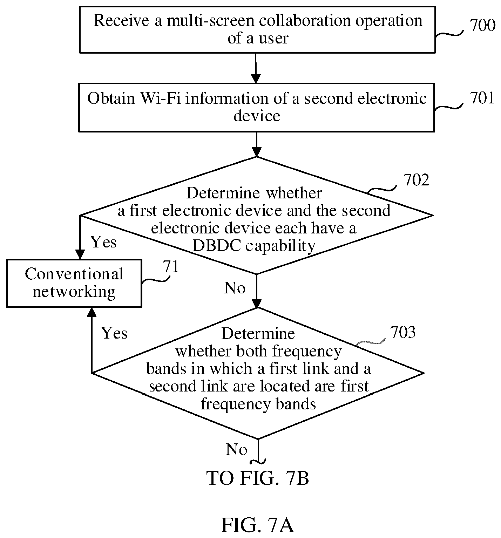

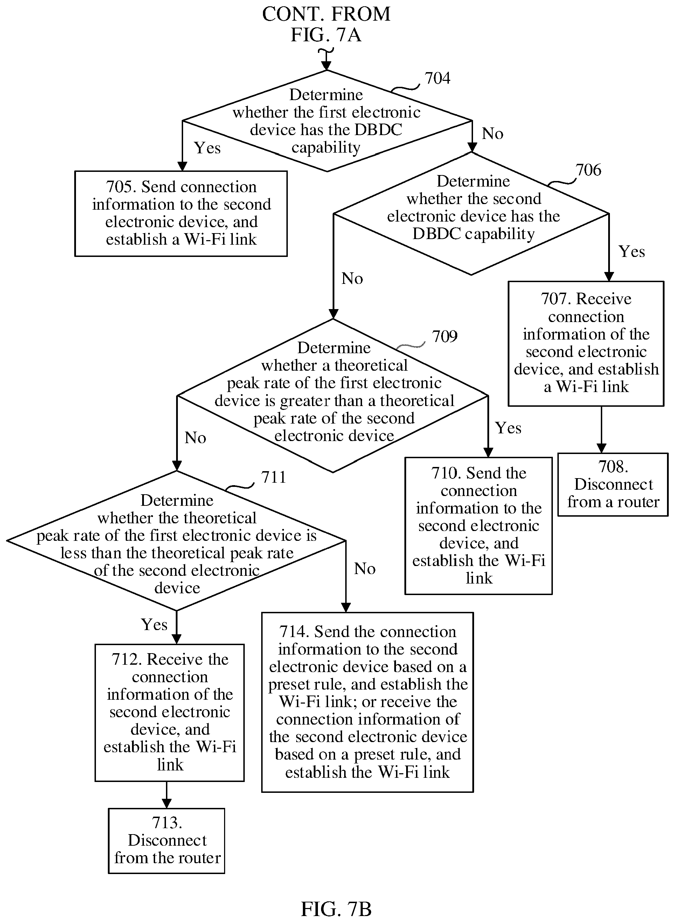

FIG. 7A and FIG. 7B are a schematic flowchart of a data transmission management method according to an embodiment of this application. The method is applied to a first electronic device, and a first link (a Wi-Fi link) exists between the first electronic device and a wireless access point (for example, a router, and an example in which the wireless access point is the router is used for description below). The router provides a wireless communication network to the first electronic device through the first link. As shown in FIG. 7A and FIG. 7B, the method includes the following steps.

700. Receive a user operation. The user operation is used for determining a second electronic device that establishes a link with the first electronic device for data transmission. A second link (a Wi-Fi link) exists between the second electronic device and the router. The router provides a wireless communication network to the second electronic device through the second link.

The user operation includes a multi-screen collaboration operation (an example in which user operation is the multi-screen collaboration operation is used for description below). The multi-screen collaboration operation is used for controlling the first electronic device and the second electronic device to establish a collaboration connection, for example and as according to the claimed invention, establish a P2P link for the collaboration connection. The multi-screen collaboration operation may be triggered when a user clicks/taps a multi-screen collaboration control on the electronic device (the first electronic device or the second electronic device) After the user clicks/taps the multi-screen collaboration control, a multi-screen collaboration prompt may appear on the electronic device (the first electronic device or the second electronic device), and the multi-screen collaboration operation may be triggered when the user clicks/taps the multi-screen collaboration prompt. The P2P link is used for transmitting multi-screen collaboration data of the first electronic device and the second electronic device. The multi-screen collaboration data is data transmitted between the first electronic device and the second electronic device when establishing the collaboration connection, for example, a video stream for screen projection and a control operation instruction for collaboration (for example, the first electronic device sends the control operation instruction on the second electronic device to the second electronic device through the P2P link, so that the second electronic device performs a corresponding operation).

In some embodiments of this application, after the user operation is received, a link for data transmission between the first electronic device and the second electronic device is established. A moment for establishing the link for data transmission is not limited in this application, and the link for data transmission may be established at any moment after 700 in FIG. 7A and FIG. 7B, for example, after 701 or after 705.

701. A first electronic device obtains Wi-Fi capability information of a second electronic device.

In some embodiments not encompassed by the wording of the claims, when the first electronic device and the second electronic device do not respond to the multi-screen collaboration operation to establish the P2P link, the first electronic device may perform data transmission with the second electronic device through Bluetooth (Bluetooth, BT) or NFC communication and obtain the Wi-Fi capability information of the second electronic device. For example, when a distance between the first electronic device and the second electronic device is less than a preset distance threshold, the first electronic device may obtain the Wi-Fi capability information of the second electronic device from the second electronic device based on NFC communication. If the first electronic device and the second electronic device have responded to the multi-screen collaboration operation to establish the P2P link, the first electronic device may perform data transmission with the second electronic device through Bluetooth, NFC, or Wi-Fi communication and obtain the Wi-Fi capability information of the second electronic device. The Wi-Fi capability information is used for representing performance information of the electronic device for wireless communication. The Wi-Fi capability information includes a DBDC capability and a theoretical peak rate. The DBDC capability is used for determining whether the electronic device can perform data transmission in a DBDC mode. If an electronic device has the DBDC capability, it is determined that the electronic device can perform data transmission in the DBDC mode. The theoretical peak rate is used for representing a maximum transmission rate of data transmission by the electronic device. The Wi-Fi capability information may be further a channel switch announcement (Channel Switch Announcement, CSA) capability. An electronic device has the CSA capability when establishing a collaboration connection to another electronic device (for example, an electronic device W), and it indicates that the electronic device can automatically initiate channel switching when performing data transmission with the electronic device W, and the electronic device W performs channel switching based on the channel switching initiated by the electronic device. An electronic device that is determined as a group owner (Group owner, GO) in two devices that establish collaboration has the CSA capability, and an electronic device that is determined as a gower client (Gower Client, GC) does not have the CSA capability. It may be understood that the first electronic device may be a GC or may be a GO.

The Wi-Fi capability information may further include information about a currently connected router, that is, information about a router that is currently connected to the second electronic device. The information about the currently connected router may include: a connected Wi-Fi name and a connected Wi-Fi basic service set identifier (Basic Service Set Identifier, BSSID). It may be determined, based on the information about the currently connected router, whether the first electronic device and the second electronic device are connected to a same Wi-Fi. The information about the currently connected router may further include an operating frequency band for data transmission with the router. An operating frequency band of the electronic device, for example, 5 GHz or 2.4 GHz, may be determined according to the information about the currently connected router when the electronic device communicates with the router.

In some embodiments of this application, the first electronic device sends Wi-Fi capability information of the first electronic device to the second electronic device. When obtaining the Wi-Fi capability information of the second electronic device, the first electronic device may send the Wi-Fi capability information of the first electronic device to the second electronic device, or after obtaining the Wi-Fi capability information of the second electronic device, the first electronic device may send the Wi-Fi capability information of the first electronic device to the second electronic device, or certainly before obtaining the Wi-Fi capability information of the second electronic device, the first electronic device may send the Wi-Fi capability information of the first electronic device to the second electronic device. After receiving the Wi-Fi capability information sent by the first electronic device, the second electronic device may perform transmission capability comparison and determine whether a transmission capability of the first electronic device is stronger than that of the second electronic device.

702. The first electronic device determines whether the first electronic device and the second electronic device each have a DBDC capability.

That an electronic device has a DBDC capability indicates that a transmission capability of the electronic device is good. If the first electronic device and the second electronic device each have the DBDC capability, it indicates that a data transmission capability in the multi-screen collaborative system formed by the first electronic device, the second electronic device, and the router is good, and there is no need to change conventional networking in the multi-screen collaborative system. 71 is performed, that is, conventional networking is performed, and the process ends. The conventional networking is networking in which the multi-screen collaborative system formed by the first electronic device, the second electronic device, and the router is a triangular structure. For example, as shown in FIG. 1, a P2P link exists between the tablet computer 20 and the mobile phone 10, a Wi-Fi link exists between the tablet computer 20 and the router 30, a Wi-Fi link exists between the mobile phone 10 and the router 30, and the three links form networking of the triangular structure. If one electronic device of the first electronic device and the second electronic device does not have the DBDC capability, networking is performed in a conventional networking manner of the multi-screen collaborative system, and a working mode of one electronic device may be in a DBAC mode, resulting in a relatively poor data transmission capability (reference may be made to a related description of an electronic device working scenario in which the working mode is the DBAC mode in related descriptions of FIG. 5 and FIG. 6). Therefore, if neither the first electronic device nor the second electronic device has the DBDC capability, 703 is performed, that is, it is determined whether both frequency bands in which a first link and a second link are located are first frequency bands. The first frequency band may be set according to a frequency band in which a P2P channel between the first electronic device and the second electronic device is located during multi-screen collaboration. For example, the frequency band in which the P2P channel is located is 5 GHz, the first frequency band is set to 5 GHz. The frequency band in which the P2P channel is located may be determined according to hardware structures of the first electronic device and the second electronic device. For example, if both the first electronic device and the second electronic device have two baseband processing modules, it is determined that the frequency band in which the P2P channel is located is 5 GHz. If the frequency band in which the first link is located (or the frequency band in which the second link is located) is not the first frequency band, as according to the claimed invention, the frequency band in which the first link is located (or the frequency band in which the second link is located) is a preset frequency band, for example, 2.4 GHz. That is, if the frequency band in which the first link (or the second link) is located is not 5 GHz, the frequency band in which the first link (or the second link) is located is 2.4 GHz.

If both the frequency bands in which the first link and the second link are located are the first frequency bands (not encompassed by the claimed invention), there is no need to change conventional networking in the multi-screen collaborative system. 71 is performed, that is, conventional networking is performed, and the process ends. For example, both the frequency bands in which the first link and the second link are located are 5 GHz, networking is performed in a conventional manner.

If the frequency bands in which the first link and the second link are not the first frequency bands simultaneously, 704 is performed, that is, it is determined whether the first electronic device has the DBDC capability. If the first electronic device has the DBDC capability, 705 is performed, that is, the first electronic device sends connection information to the second electronic device and a Wi-Fi link is established. The connection information is used for establishing the Wi-Fi link with the first electronic device. The connection information may include a device connection name and a device connection password of the first electronic device. The second electronic device establishes the Wi-Fi link with the first electronic device according to the received connection information. After establishing the Wi-Fi link, the first electronic device is referred to as a simulation router (Soft Access Point, Soft-AP). The Soft-AP can implement a function of the router and provide a wireless communication network (Wi-Fi) to another electronic device. After enabling a function of the Soft-AP, an electronic device provides Wi-Fi to another electronic device like a common router. The electronic device may enable the function of the Soft-AP through a cellular network (for example, 2G, 3G, 4G, or 5G) of the electronic device to provide Wi-Fi to another electronic device, for example, share a hotspot, and another electronic device may be connected to the wireless communication network through the hotspot of the electronic device, or the electronic device may enable the function of the Soft-AP through a router connected to the electronic device (for example, by sharing a Wi-Fi signal), to provide Wi-Fi to another electronic device. A method for the electronic device to enable the function of the Soft-AP is not limited herein.

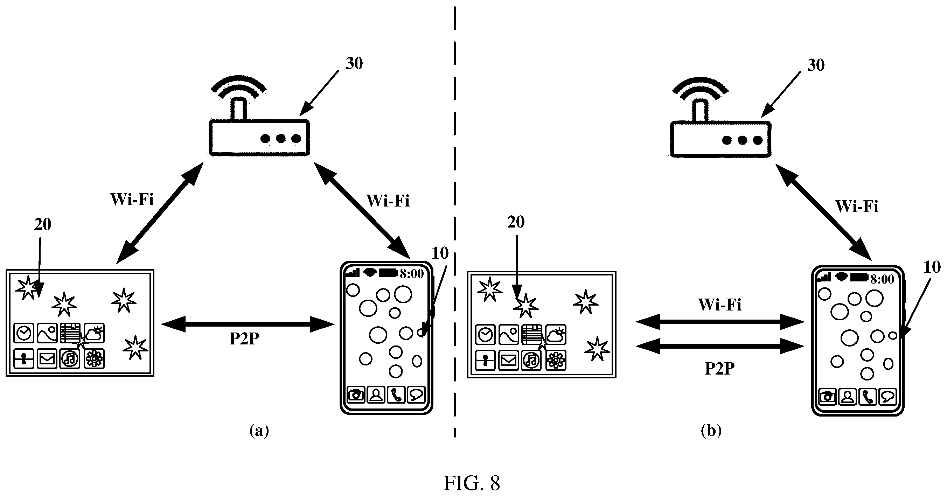

It may be understood that after establishing the Wi-Fi link with the first electronic device, the second electronic device disconnects from the router, that is, disconnects the second link. For example, the first electronic device is the mobile phone 10, the second electronic device is the tablet computer 20, and the mobile phone 10 is determined as the Soft-AP. FIG. 8 is a schematic diagram of a multi-screen collaborative system to be used with an an embodiment of this application. (a) in FIG. 8 is a schematic diagram of a multi-screen collaborative system before the first electronic device is determined as the Soft-AP. As shown in (a) in FIG. 8, a P2P channel for data transmission is included between the mobile phone 10 and the tablet computer 20. Wi-Fi channels for data transmission are included between the mobile phone 10 and the router 30 and between the tablet computer 20 and the router 30. (b) in FIG. 8 is a schematic diagram of a multi-screen collaborative system after the second electronic device establishes the Wi-Fi link with the first electronic device. As shown in (b) in FIG. 8, after the mobile phone 10 enables the function of the Soft-AP, the P2P channel and the Wi-Fi channel for data transmission are included between the mobile phone 10 and the tablet computer 20. The Wi-Fi channel for data transmission is included between the mobile phone 10 and the router 30. It may be understood that a scenario shown in FIG. 8 is a schematic diagram in which before the mobile phone 10 is determined as the Soft-AP, the P2P channel for data transmission is established between the mobile phone 10 and the tablet computer 20. In some other embodiments of this application, after the mobile phone 10 is determined as the Soft-AP, the P2P channel for data transmission may be established between the mobile phone 10 and the tablet computer 20.

Because before the mobile phone 10 enables the function of the Soft-AP, a frequency band in which the Wi-Fi channel between the tablet computer 20 and the router 30 is located and a frequency band between the tablet computer 20 and the mobile phone 10 may be different frequency bands, when the tablet computer 20 respectively performs data transmission with the router 30 and the mobile phone 10, the tablet computer 20 needs to perform frequency band switching (for example, switch from 2.4 GHz to 5 GHz, or switch from 5 GHz to 2.4 GHz). After the mobile phone 10 enables the function of the Soft-AP, the Wi-Fi channel between the tablet computer 20 and the router 30 is cancelled, only the P2P channel and the Wi-Fi channel between the tablet computer 20 and the mobile phone 10 are reserved, and the P2P channel and the Wi-Fi channel between the tablet computer 20 and the mobile phone 10 may perform data transmission on a same frequency band (for example, 5 GHz). Therefore, the tablet computer 20 does not need to perform frequency band switching when using the P2P channel and the Wi-Fi channel, thereby avoiding a time loss caused by frequency band switching and improving data transmission efficiency.

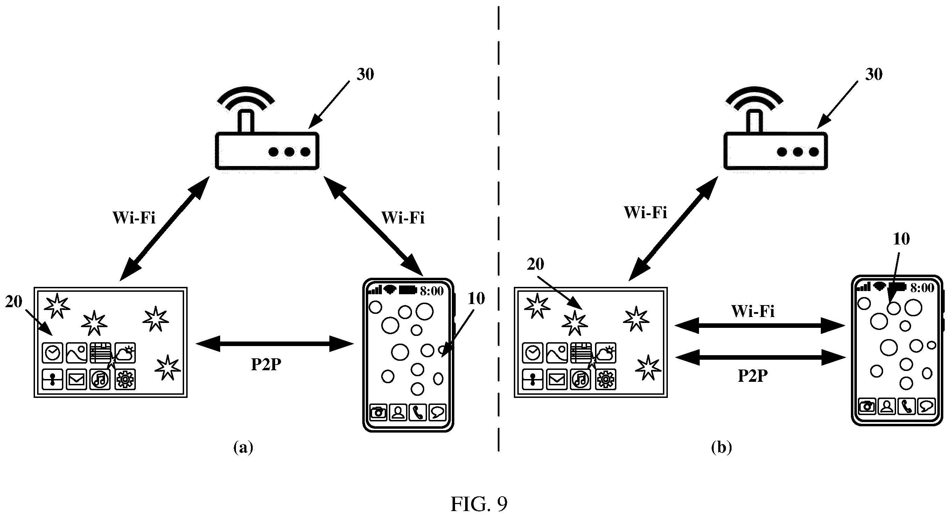

If the first electronic device does not have the DBDC capability, 706 is performed, that is, it is determined whether the second electronic device has the DBDC capability. If the second electronic device has the DBDC capability, the second electronic device is used as the Soft-AP. When it is determined that the second electronic device may be used as the Soft-AP, the first electronic device may notify the second electronic device that the second electronic device may be used as the Soft-AP. Alternatively, in some embodiments not encompassed by the wording of the claims, the second electronic device obtains Wi-Fi capability information of the first electronic device, and may determine whether the second electronic device is used as the Soft-AP according to the Wi-Fi capability information of the first electronic device (a determining process may be shown in 702 to 706 in FIG. 7A and FIG. 7B). When learning that the second electronic device is used as the Soft-AP, the second electronic device enables the function of the Soft-AP and may send connection information to the first electronic device. The connection information is used for establishing the Wi-Fi link with the second electronic device. The connection information may include a device connection name and a device connection password of the second electronic device. After enabling the function of the Soft-AP according to the notification of the first electronic device, the second electronic device may actively send the connection information to the first electronic device. If the second electronic device has the DBDC capability, 707 is performed, that is, the first electronic device receives connection information of the second electronic device and establishes a Wi-Fi link. After establishing the Wi-Fi link with the second electronic device, the first electronic device performs 708 and disconnects from the router, that is, disconnects the first link. For example, the first electronic device is the mobile phone 10, the second electronic device is the tablet computer 20, and the tablet computer 20 is determined as the Soft-AP. FIG. 9 is a schematic diagram of a multi-screen collaborative system to be used with an embodiment of this application. (a) in FIG. 9 is a schematic diagram of a multi-screen collaborative system before the second electronic device is determined as the Soft-AP. As shown in (a) in FIG. 9, a P2P channel for data transmission is included between the mobile phone 10 and the tablet computer 20. Wi-Fi channels for data transmission are included between the mobile phone 10 and the router 30 and between the tablet computer 20 and the router 30. (b) in FIG. 9 is a schematic diagram of a multi-screen collaborative system after the first electronic device establishes the Wi-Fi link with the second electronic device. As shown in (b) in FIG. 9, after the tablet computer 20 enables the function of the Soft-AP, the P2P channel and the Wi-Fi channel for data transmission are included between the mobile phone 10 and the tablet computer 20. The Wi-Fi channel for data transmission is included between the tablet computer 20 and the router 30. It may be understood that a scenario shown in FIG. 9 is a schematic diagram in which before the tablet computer 20 is determined as the Soft-AP, the P2P channel for data transmission is established between the mobile phone 10 and the tablet computer 20. In some other embodiments of this application, after the tablet computer 20 is determined as the Soft-AP, the P2P channel for data transmission may be established between the mobile phone 10 and the tablet computer 20.

Because before the tablet computer 20 enables the function of the Soft-AP, a frequency band in which the Wi-Fi channel between the mobile phone 10 and the router 30 is located and a frequency band between the tablet computer 10 and the tablet computer 20 may be different frequency bands, when the mobile phone 10 respectively performs data transmission with the router 30 and the mobile phone 10, the mobile phone 10 needs to perform frequency band switching (for example, switch from 2.4 GHz to 5 GHz, or switch from 5 GHz to 2.4 GHz). After the tablet computer 20 enables the function of the Soft-AP, the Wi-Fi channel between the mobile phone 10 and the router 30 is cancelled, only the P2P channel and the Wi-Fi channel between the mobile phone 10 and the tablet computer 20 are reserved, and the P2P channel and the Wi-Fi channel between the mobile phone 10 and the tablet computer 20 may perform data transmission on a same frequency band (for example, 5 GHz). Therefore, the mobile phone 10 does not need to perform frequency band switching when using the P2P channel and the Wi-Fi channel, thereby avoiding a time loss caused by frequency band switching and improving data transmission efficiency.

If the second electronic device does not have the DBDC capability, 709 is performed, that is, it is determined whether a theoretical peak rate of the first electronic device is greater than a theoretical peak rate of the second electronic device. If the theoretical peak rate of the first electronic device is greater than the theoretical peak rate of the second electronic device, 710 is performed, that is, the first electronic device sends the connection information to the second electronic device and the Wi-Fi link is established. For some specific implementations of 710, reference may be made to the related descriptions of 705.

If the theoretical peak rate of the first electronic device is not greater than the theoretical peak rate of the second electronic device, 711 is performed, that is, it is determined whether the theoretical peak rate of the first electronic device is less than the theoretical peak rate of the second electronic device. If the theoretical peak rate of the first electronic device is less than the theoretical peak rate of the second electronic device, 712 is performed, that is, the connection information of the second electronic device is received, and the Wi-Fi link is established. After establishing the Wi-Fi link with the second electronic device, the first electronic device performs 713 and disconnects from the router, that is, disconnects the second link.

If the theoretical peak rate of the first electronic device is less than the theoretical peak rate of the second electronic device, 714 is performed, that is, the connection information is sent to the second electronic device based on a preset rule, and the Wi-Fi link is established; or the connection information of the second electronic device is received based on a preset rule, and the Wi-Fi link is established. That is, when the theoretical peak rate of the first electronic device is equal to the theoretical peak rate of the second electronic device, one of the first electronic device and the second electronic device may be determined as the Soft-AP according to the preset rule.

If the first electronic device is determined as the Soft-AP based on the preset rule, the first electronic device sends the connection information to the second electronic device and the Wi-Fi link is established. After establishing the Wi-Fi link with the first electronic device, the second electronic device disconnects from the router, that is, disconnects the second link. If the second electronic device is determined as the Soft-AP based on the preset rule, the first electronic device receives the connection information of the second electronic device and establishes the Wi-Fi link. After establishing the Wi-Fi link with the second electronic device, the first electronic device disconnects from the router, that is, disconnects the first link.

Through the foregoing embodiments, a quantity of electronic devices that work in the DBAC mode in a data transmission scenario can be reduced. For example, a scenario in which an electronic device works in the DBAC mode and an electronic device works in the DBDC mode in the multi-screen collaborative system is changed into a scenario in which no electronic device works in the DBAC mode in the multi-screen collaborative system, or a scenario in which two electronic devices work in the DBAC mode in the multi-screen collaborative system is changed into a scenario in which only one electronic device works in the DBAC mode in the multi-screen collaborative system. The electronic devices working in the DBAC mode in the multi-screen collaborative system are reduced, the time loss in a frequency band switching process can be reduced, and a time at which data transmission cannot be performed in the multi-screen collaborative system can be effectively reduced, thereby improving the data transmission efficiency. In the foregoing embodiments, a technical problem that when the electronic device works in the DBAC mode (the DBSC mode), the P2P link and the Internet access link cannot perform data transmission simultaneously and need to perform data transmission in a timesharing manner, resulting in reduction of the data transmission efficiency can be resolved. In the foregoing embodiments, the quantity of electronic devices that work in the DBAC mode in the multi-screen collaborative system can be reduced, so that the data transmission efficiency in the multi-screen collaborative system is improved. It may be understood that in addition to multi-screen collaboration, the P2P channel may also be used for another service, for example, screen projection and file transfer. Therefore, in a screen projection scenario (file transfer scenario), when there is the technical problem of reduced data transmission efficiency caused by the DBAC mode (the DBSC mode), in the foregoing embodiments, the quantity of electronic devices that work the DBAC mode in the scenario can also be reduced, so that the data transmission efficiency is improved.

In the data transmission management method shown in FIG. 7A and FIG. 7B, that the first electronic device determines whether the first electronic device or the second electronic device is used as the Soft-AP according to the Wi-Fi capability information of the second electronic device, and changes the conventional networking is according to the claimed invention. It may be understood that in some embodiments not encompassed by the wording of the claims, the first electronic device may send the Wi-Fi capability information of the first electronic device and a transmission capability comparison request to the second electronic device. The transmission capability comparison request is used for requesting the second electronic device to determine whether the second electronic device or the first electronic device is used as the Soft-AP according to the Wi-Fi capability information of the first electronic device and changes the conventional networking. In some embodiments not encompassed by the wording of the claims, the first electronic device and the second electronic device may send the Wi-Fi capability information to each other, respectively perform transmission capability comparison, determine whether the first electronic device or the second electronic device is used as the Soft-AP according to a transmission capability comparison result, and change the conventional networking. For example, after the first electronic device and the second electronic device send the Wi-Fi capability information to each other, the first electronic device performs transmission capability comparison according to the Wi-Fi capability information sent by the second electronic device, determines that a transmission capability of the first electronic device is stronger than that of the second electronic device according to the transmission capability comparison, determines to not disconnect from the router, and determines the first electronic device as the Soft-AP to provide Wi-Fi to the second electronic device. The second electronic device performs transmission capability comparison according to the Wi-Fi capability information sent by the first electronic device, determines that the transmission capability of the second electronic device is weaker than that of the first electronic device according to the transmission capability comparison, determines to disconnect from the router, and determines to establish a Wi-Fi connection to the first electronic device. After determining the first electronic device as the Soft-AP to provide Wi-Fi to the second electronic device, the first electronic device may send the connection information corresponding to the first electronic device to the second electronic device. If the second electronic device determines to establish the Wi-Fi connection to the first electronic device and does not receive the connection information sent by the first electronic device, the second electronic device may actively obtain the connection information from the first electronic device. The second electronic device establishes a connection to the first electronic device according to the connection information sent by the first electronic device, and after the connection is established, the first electronic device provides a Wi-Fi service to the second electronic device. For some specific implementations of the foregoing embodiments, reference may be made to the related descriptions of FIG. 7A and FIG. 7B. Details are not described herein again.

In some embodiments of this application, after step 705, 710, or 714 shown in FIG. 7B is performed, if the second electronic device successfully establishes the Wi-Fi link with the first electronic device or the first electronic device successfully establishes the Wi-Fi link with the second electronic device, a corresponding prompt may be generated and displayed according to a preset rule. The prompt may be used for prompting a user that networking has been changed in the multi-screen collaborative system. For example, after the second electronic device successfully establishes the Wi-Fi link with the first electronic device, a first prompt may be displayed on a display interface of the first electronic device, where the first prompt is used for prompting that the first electronic device is providing the Wi-Fi service to the second electronic device. Alternatively, a second prompt may be displayed on a display interface of the second electronic device, where the second prompt is used for prompting that the second electronic device is accessing the Internet through the Wi-Fi service provided by the first electronic device.

In some embodiments of this application, after step 705, 710, or 714 shown in FIG. 7B is performed, if the second electronic device successfully establishes the Wi-Fi link with the first electronic device, it is determined whether a frequency band for data transmission between the second electronic device and the first electronic device is the same as a frequency band for data transmission between the first electronic device and the router. If the frequency band for data transmission between the second electronic device and the first electronic device is the same as the frequency band for data transmission between the first electronic device and the router, it is determined, according to a channel for data transmission between the first electronic device and the router, whether a channel for data transmission between the second electronic device and the first electronic device is adjusted. If the channel for data transmission between the first electronic device and the router is inconsistent with the channel for data transmission between the second electronic device and the first electronic device, it is determined that the channel for data transmission between the second electronic device and the first electronic device is adjusted, that is, channel switching is performed when the current multi-screen collaborative system is intra-frequency inter-channel, so that the switched multi-screen collaborative system is intra-frequency co-channel. Otherwise, it is determined that the channel for data transmission between the second electronic device and the first electronic device is not adjusted, that is, when the current multi-screen collaborative system is intra-frequency co-channel, there is no need to adjust the channel for data transmission between the second electronic device and the first electronic device.

It may be understood that when the current multi-screen collaborative system is intra-frequency inter-channel, a GO in the multi-screen collaborative system may actively initiate channel switching. After the GO initiate channel switching, a GC performs channel switching in response to the channel switching initiated by the GO, so that a channel for data transmission between the GO and the GC is switched. For related descriptions of the GO and the GC, reference may be made to the related description of step 701 in FIG. 7A. Details are not described herein again.

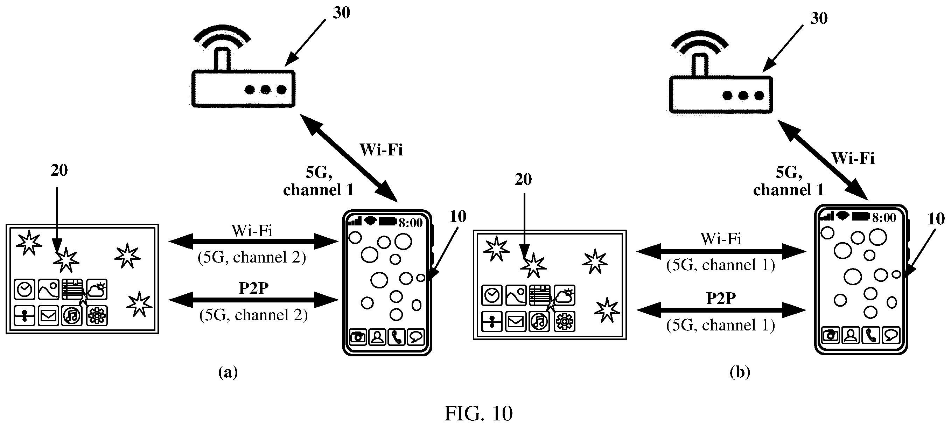

For example, as shown in (a) in FIG. 10, a frequency band for data transmission between the mobile phone 10 and the router 30 is consistent with a frequency band for data transmission between the mobile phone 10 and the tablet computer 20 (which are 5G), and it is determined that intra-frequency exists in the current multi-screen collaborative system. A channel (channel 1) for data transmission between the mobile phone 10 and the router 30 is inconsistent with a channel (channel 2) for data transmission between the mobile phone 10 and the tablet computer 20, and it is determined that the current multi-screen collaborative system is intra-frequency inter-channel. In a case of intra-frequency inter-channel, the channel for data transmission between the mobile phone 10 and the tablet computer 20 is switched, so that the multi-screen collaborative system is changed into intra-frequency co-channel. If the mobile phone 10 is a GO, the mobile phone 10 may actively initiate channel switching. After the mobile phone 10 initiates channel switching, the tablet computer 20 performs channel switching in response to the channel switching initiated by the mobile phone 10. As shown in (b) in FIG. 10, the channel for data transmission between the mobile phone 10 and the tablet computer 20 is switched from the channel 2 to the channel 1, so that the multi-screen collaborative system is changed into intra-frequency co-channel.

In the foregoing embodiments, intra-frequency inter-channel in the multi-screen collaborative system is changed into intra-frequency co-channel, and data transmission efficiency can be further improved.

In some embodiments of this application, after step 705, 710, or 714 shown in FIG. 7B is performed, if the second electronic device successfully establishes the Wi-Fi link with the first electronic device, the channel for data transmission between the second electronic device and the first electronic device may be monitored, and if the channel for data transmission between the second electronic device and the first electronic device is changed, it is determined whether the frequency band for data transmission between the second electronic device and the first electronic device is the same as the frequency band for data transmission between the first electronic device and the router. If the frequency band for data transmission between the second electronic device and the first electronic device is the same as the frequency band for data transmission between the first electronic device and the router, it is determined, according to the channel for data transmission between the first electronic device and the router, whether the channel for data transmission between the second electronic device and the first electronic device is adjusted. That is, it is determined, according to the channel for data transmission between the first electronic device and the router, whether the current multi-screen collaborative system is intra-frequency inter-channel. If the current multi-screen collaborative system is intra-frequency inter-channel, it is determined that the channel for data transmission between the second electronic device and the first electronic device needs to be adjusted, so that the multi-screen collaborative system is changed into intra-frequency co-channel. When the channel for data transmission between the second electronic device and the first electronic device is changed, it is determined whether a data transmission case in the multi-screen collaborative system is adjusted, and it can be determined in time whether the data transmission case in the multi-screen collaborative system needs to be adjusted, so that the data transmission efficiency in the multi-screen collaborative system can be effectively ensured.

In some embodiments of this application, after step 707, 712, or 714 shown in FIG. 7B is performed, if the first electronic device successfully establishes the Wi-Fi link with the second electronic device, it is determined whether a frequency band for data transmission between the first electronic device and the second electronic device is the same as a frequency band for data transmission between the second electronic device and the router. If the frequency band for data transmission between the second electronic device and the first electronic device is the same as the frequency band for data transmission between the first electronic device and the router, it is determined, according to a channel for data transmission between the second electronic device and the router, whether a channel for data transmission between the first electronic device and the second electronic device is adjusted. For some specific implementations of the foregoing embodiments, reference may be made to the related descriptions of the foregoing embodiments. Details are not described herein again.

Because after step 705, 710, or 714 shown in FIG. 7B is performed, the first electronic device is connected to the router, and the second electronic device is not connected to the router, in this case, if the second electronic device is a GO, when determining whether the current multi-screen collaborative system is intra-frequency inter-channel, the second electronic device cannot directly obtain a channel for data transmission with the router (that is, the channel for data transmission between the first electronic device and the router) during multi-screen collaboration and needs to obtain the channel for data transmission with the router through the first electronic device. Therefore, it is not very convenient for the second electronic device to determine whether the current multi-screen collaborative system is intra-frequency inter-channel, resulting in a relatively slow speed of actively initiating channel switching. Alternatively, because after step 707, 712, or 714 shown in FIG. 7B is performed, the second electronic device is connected to the router, and the first electronic device is not connected to the router, in this case, if the first electronic device is a GO, when determining whether the current multi-screen collaborative system is intra-frequency inter-channel, the first electronic device cannot directly obtain a channel for data transmission with the router (that is, the channel for data transmission between the second electronic device and the router) during multi-screen collaboration and needs to obtain the channel for data transmission with the router through the second electronic device. Therefore, it is not very convenient for the first electronic device to determine whether the current multi-screen collaborative system is intra-frequency inter-channel, resulting in a relatively slow speed of actively initiating channel switching.

Based on the foregoing reason, in some embodiments of this application, one of the first electronic device and the second electronic device may be determined as the GO again according to the Soft-AP. For example, if the first electronic device is the Soft-AP, the first electronic device is determined as the GO. If the second electronic device is the Soft-AP, the second electronic device is determined as the GO. An electronic device corresponding to the Soft-AP is determined as the GO, so that in a case that intra-frequency exists in the multi-screen collaborative system, the GO may directly determine a channel for data transmission with the router, and determine, according to the channel for data transmission with the router, whether to actively initiate channel switching, so that a channel for data transmission between the GO and the router is consistent with a channel for data transmission between the GC and the GO. Because the GO directly performs data transmission with the router and the GC, the GO may directly obtain data transmission information (a data transmission frequency band and a data transmission channel) with the router and the GC, and determine, according to the data transmission information, whether to actively initiate channel switching, and can conveniently determine whether the current multi-screen collaborative system is intra-frequency inter-channel, thereby improving a speed of determining whether to perform channel switching.

For example, as shown in (a) in FIG. 10, if the mobile phone 10 is the GO, the mobile phone 10 directly performs data transmission with the tablet computer 20 and the router 30. Therefore, data transmission information can be directly obtained, and it is determined, according to the data transmission information, whether to control the tablet computer 20 to perform channel switching. If the tablet computer 20 is the GO, the tablet computer 20 does not directly perform data transmission with the router 30, and the tablet computer 20 cannot directly obtain data transmission information between the mobile phone 10 and the tablet computer 20 and need to obtain the data transmission information between the mobile phone 10 and the tablet computer 20 through data transmission with the mobile phone 10, resulting in a relatively long time for the tablet computer 20 to obtain the data transmission information.

In the foregoing embodiments, after one of the first electronic device and the second electronic device is determined as the GO again according to the Soft-AP, it can be conveniently determined whether the current multi-screen collaborative system is intra-frequency inter-channel, thereby improving the speed of determining whether to perform channel switching.

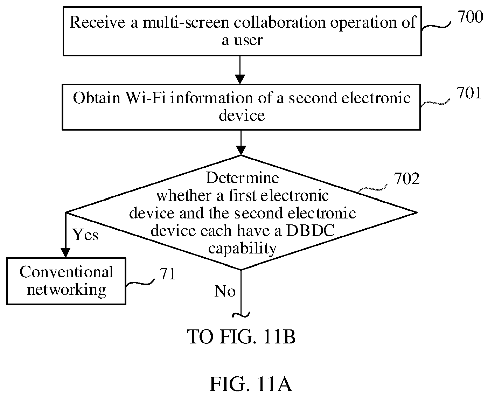

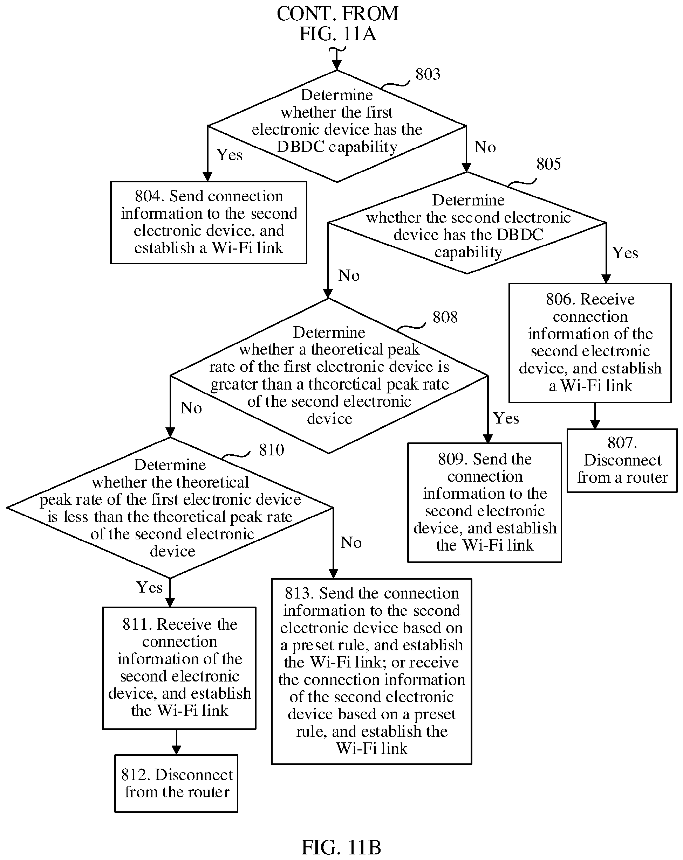

In some embodiments not encompassed by the wording of the claims, as shown in FIG. 11A and FIG. 11B, after step 702 shown in FIG. 7A is performed, if neither the first electronic device nor the second electronic device has the DBDC capability, 803 is performed, that is, it is determined whether the first electronic device has the DBDC capability. If the first electronic device has the DBDC capability, 804 is performed, that is, the first electronic device sends connection information to the second electronic device and a Wi-Fi link is established. If the first electronic device does not have the DBDC capability, 805 is performed, that is, it is determined whether the second electronic device has the DBDC capability. If the second electronic device has the DBDC capability, 806 is performed, that is, the first electronic device receives connection information of the second electronic device and establishes a Wi-Fi link. After establishing the Wi-Fi link with the second electronic device, the first electronic device performs 807 and disconnects from the router. If the second electronic device does not have the DBDC capability, 808 is performed, that is, it is determined whether a theoretical peak rate of the first electronic device is greater than a theoretical peak rate of the second electronic device. If the theoretical peak rate of the first electronic device is greater than the theoretical peak rate of the second electronic device, 809 is performed, that is, the first electronic device sends the connection information to the second electronic device and the Wi-Fi link is established. If the theoretical peak rate of the first electronic device is not greater than the theoretical peak rate of the second electronic device, 810 is performed, that is, it is determined whether the theoretical peak rate of the first electronic device is less than the theoretical peak rate of the second electronic device. If the theoretical peak rate of the first electronic device is less than the theoretical peak rate of the second electronic device, 811 is performed, that is, connection information of the second electronic device is received, and the Wi-Fi link is established. After establishing the Wi-Fi link with the second electronic device, the first electronic device performs 812 and disconnects from the router. If the theoretical peak rate of the first electronic device is less than the theoretical peak rate of the second electronic device, 813 is performed, that is, the connection information is sent to the second electronic device based on a preset rule, and the Wi-Fi link is established; or the connection information of the second electronic device is received based on a preset rule, and the Wi-Fi link is established.

For some specific implementations of 803 to 813 in FIG. 11B, reference may be made to the related descriptions of FIG. 7A and FIG. 7B, and details are not described herein again.

Through the foregoing embodiments, a quantity of electronic devices that work in the DBAC mode in a data transmission scenario can be reduced. For example, a scenario in which an electronic device works in the DBAC mode and an electronic device works in the DBDC mode in the multi-screen collaborative system is changed into a scenario in which no electronic device works in the DBAC mode in the multi-screen collaborative system, or a scenario in which two electronic devices work in the DBAC mode in the multi-screen collaborative system is changed into a scenario in which only one electronic device works in the DBAC mode in the multi-screen collaborative system. The electronic devices working in the DBAC mode in the multi-screen collaborative system are reduced, the time loss in a frequency band switching process can be reduced, and a time at which data transmission cannot be performed in the multi-screen collaborative system can be effectively reduced, thereby improving the data transmission efficiency.

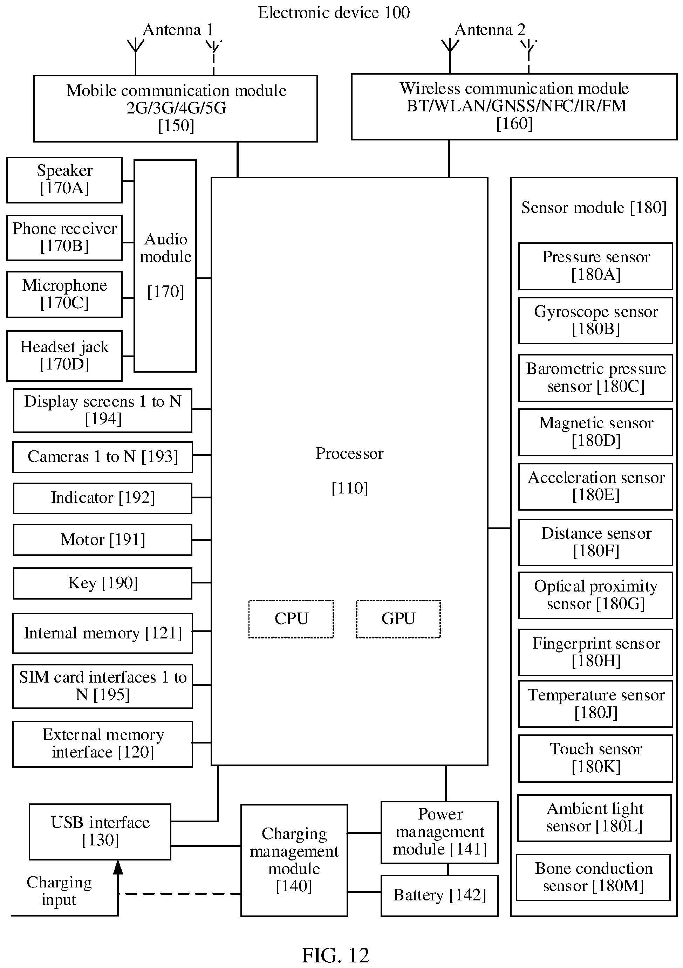

FIG. 12 is a schematic structural diagram of an electronic device 100 according to an embodiment of this application. Referring to FIG. 12, the electronic device 100 includes a processor 110, may include an external memory interface 120, includes an internal memory 121, may include a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that an example structure in this embodiment of the present invention does not constitute a specific limitation on the electronic device 100. In some other embodiments of this application, the electronic device 100 may include more or fewer components than those shown in the figure, or some components may be combined, or some components may be divided, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like.

A memory may be further configured in the processor 110, to store instructions and data. In some embodiments, the memory in the processor 110 is a cache memory. The memory may store an instruction or data that has just been used or cyclically used by the processor 110. If the processor 110 needs to use the instruction or the data again, the processor 110 may directly invoke the instruction or the data from the memory, to avoid repeated access and reduce a waiting time of the processor 110, thereby improving system efficiency.

In some embodiments, the processor 110 may include one or more interfaces. The interface may include an integrated circuit (inter-integrated circuit, I1C) interface, an integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

The I1C interface is a two-way synchronization serial bus, and includes a serial data line (serial data line, SDA) and a serial clock line (derail clock line, SCL). The I2S interface may be used for audio communication.

The PCM interface may also be used for audio communication, and sampling, quantization, and encoding of an analog signal. In some embodiments, the audio module 170 may be coupled to the wireless communication module 160 by using the PCM bus interface.

The UART interface is a universal serial data bus, and is used for asynchronous communication. The bus may be a two-way communication bus. The bus converts to-betransmitted data between serial communication and parallel communication. In some embodiments, the UART interface is usually configured to connect the processor 110 to the wireless communication module 160. For example, the processor 110 communicates with a Bluetooth module in the wireless communication module 160 by using a UART interface, to implement a Bluetooth function.

The MIPI interface may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 by using a DSI interface, to implement a display function of the electronic device 100.

The GPIO interface may be configured by using software. The GPIO interface may be configured to transmit a control signal, or may be configured to transmit a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I1C interface, an I2S interface, a UART interface, a MIPI interface, or the like.

The USB interface 130 is an interface that conforms to a USB standard specification, and may be specifically a mini USB interface, a micro USB interface, a USB Type C interface, or the like. The USB interface 130 may be configured to connect to the charger to charge the electronic device 100, or may be used for data transmission between the electronic device 100 and a peripheral device, or may be configured to connect to a headset, to play audio by using the headset. The interface may alternatively be configured to connect to another electronic device 100, for example, an AR device.

It may be understood that an interface connection relationship between the modules illustrated in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger. The charger may be a wireless charger or may be a wired charger.

The power management module 141 is configured to connect to the battery 142, the charging management module 140, and the processor 110. The power management module 141 receives an input of the battery 142 and/or the charging management module 140, to supply power to the processor 110, the internal memory 121, the display screen 194, the camera 193, the wireless communication module 160, and the like. The power management module 141 may be further configured to monitor parameters such as a battery capacity, a battery cycle count, and a battery state of health (electric leakage and impedance).

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1.

The modem processor may include a modulator and a demodulator. The modulator is configured to modulate a to-be-sent low-frequency baseband signal into a medium-highfrequency signal. The demodulator is configured to demodulate the received electromagnetic wave signal into a low-frequency baseband signal. Next, the demodulator transmits the demodulated low-frequency baseband signal to the baseband processor for processing. The low-frequency baseband signal is processed by the baseband processor and then transmitted to an AP. The AP outputs a sound signal through an audio device (which is not limited to the speaker 170A, the phone receiver 170B, and the like), or displays an image or a video through the display screen 194. In some embodiments, the modem processor may be an independent device. In some other embodiments, the modem processor may be independent of the processor 110, and the modem processor and the mobile communication module 150 or another functional module may be disposed in the same component.

The wireless communication module 160 may provide a wireless communication solution such as a wireless local area network (wireless local area networks, WLAN), Bluetooth (Bluetooth, BT), global navigation satellite system (global navigation satellite system, GNSS), frequency modulation (frequency modulation, FM), near field communication (near field communication, NFC), or an infrared (infrared, IR) technology applied to the electronic device 100. The wireless communication module 160 may be one or more components into which at least one communication processing module is integrated. The wireless communication module 160 receives an electromagnetic wave by using the antenna 2, performs frequency modulation and filtering processing on an electromagnetic wave signal, and sends a processed signal to the processor 110. The wireless communication module 160 may alternatively receive a to-be-sent signal from the processor 110, perform frequency modulation and amplification on the to-be-sent signal, and convert the signal into an electromagnetic wave for radiation by using the antenna 2.

The electronic device 100 implements a display function by using the GPU, the display screen 194, the application processor, and the like. The GPU is a microprocessor for service anomaly reminding and connects the display 194 and the application processor. The GPU is configured to perform mathematical and geometric computation, and render an image. The processor 110 may include one or more GPUs, and execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a miniled, a microLed, a micro-oLed, a quantum dot light emitting diode (quantum dot light emitting diodes, QLED), or the like.

In some embodiments, the electronic device 100 may include one or N display screens 194, and N is a positive integer greater than 1. The electronic device 100 can implement a photographing function by using the ISP, the camera 193, the video codec, the GPU, the display screen 194, the application processor, and the like.

The camera 193 is configured to capture a static image or a video. An optical image of an object is generated through the lens, and is projected onto the photosensitive element. The light-sensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, and N is a positive integer greater than 1.

The digital signal processor is configured to process a digital signal, and in addition to a digital image signal, may further process another digital signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, by referring to a mode of transmission between human brain neurons, and may further continuously perform self-learning. The NPU may be used to implement an application such as intelligent cognition of the electronic device 100, for example, image recognition, facial recognition, voice recognition, and text understanding.

The internal memory 121 may include one or more random access memories (random access memories, RAMs) and one or more non-volatile memories (non-volatile memories, NVMs). In this embodiment of this application, the internal memory 121 may also be referred to as a memory. In some embodiments, the processor (such as a CPU) may store, in the memory, a display moment of each time of displaying of the guide information and a cumulative number of times of displaying the guide information.

The external memory interface 120 may be configured to connect to an external non-volatile memory, to expand a storage capability of the electronic device 100. The external non-volatile memory communicates with the processor 110 by using the external memory interface 120, to implement a data storage function, for example storing a file such as a music or a video in the external non-volatile memory.

The electronic device 100 may implement an audio function by using the audio module 170, the speaker 170A, the phone receiver 170B, the microphone 170C, the headset jack 170D, the application processor, and the like. For example, music playing or recording.

The audio module 170 is configured to convert digital audio information into an analog audio signal output, and is further configured to convert an analog audio input into a digital audio signal. The audio module 170 may be further configured to encode and decode an audio signal.

The speaker 170A, also referred to as a "speaker", is configured to convert an audio electrical signal into a sound signal. Music can be listened to or a hands-free call can be answered by using the speaker 170A in the electronic device 100.

The telephone receiver 170B, also referred to as a "receiver", is configured to convert an audio electrical signal into a sound signal. When the electronic device 100 is used to answer a call or receive voice information, the telephone receiver 170B may be put close to a human ear, to receive the voice information.

The microphone 170C, also referred to as a "microphone" or a "microphone", is configured to convert a sound signal into an electrical signal. When making a call or sending voice information, a user may speak with the mouth approaching the microphone 170C, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may be alternatively disposed in the electronic device 100, to collect a sound signal, implement noise reduction, recognize a sound source, implement a directional recording function, and the like.

The headset jack 170D is configured to connect to a wired headset. The headset jack 170D may be a USB interface 130, or may be a 3.5 mm open mobile electronic device 100 platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display screen 194. There are a plurality of types of pressure sensors 180A, for example, a resistive pressure sensor, an inductive pressure sensor, and a capacitive pressure sensor. The capacitive pressure sensor may include at least two parallel plates having conductive materials. When a force is applied to the pressure sensor 180A, the capacitance between electrodes changes. The electronic device 100 determines strength of pressure based on a change of the capacitance. When a touch operation is performed on the display screen 194, the electronic device 100 detects strength of the touch operation by using the pressure sensor 180A. The electronic device 100 may further calculate a position of the touch based on a detection signal of the pressure sensor 180A.

The gyroscope sensor 180B may be configured to determine a motion posture of the electronic device 100. In some embodiments, a desktop card displayed on the display interface may be updated through positioning of the gyroscope sensor 180B.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D may include a Hall effect sensor. The electronic device 100 may detect opening and closing and a flip cover leather case by using the magnetic sensor 180D. In some embodiments, when the electronic device 100 is a clamshell phone, the electronic device 100 may detect opening and closing of a flip cover based on the magnetic sensor 180D. Further, based on a detected opening or closing state of the leather case or a detected opening or closing state of the flip cover, a feature such as automatic unlocking of the flip cover is set.

The acceleration sensor 180E may detect acceleration values of the electronic device 100 in all directions (generally in three axes). When the electronic device 100 is stationary, a magnitude and a direction of a gravity may be detected. The acceleration sensor 180E may be further configured to recognize a posture of the electronic device 100, and is applied to switching between a landscape mode and a portrait mode, a pedometer, or another application.

The distance sensor 180F is configured to measure a distance. The electronic device 100 may measure a distance through infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and an optical detector such as a photodiode. The light emitting diode may be an infrared light emitting diode. The electronic device 100 may emit infrared light by using the light-emitting diode. The electronic device 100 detects infrared reflected light from a nearby object by using the photodiode. When detecting sufficient reflected light, the electronic device 100 may determine that there is an object near the electronic device 100.

The ambient light sensor 180L is configured to sense luminance of ambient light. The electronic device 100 may adaptively adjust a luminance of the display screen 194 according to perceived brightness of the ambient light. The ambient light sensor 180L may be further configured to automatically adjust white balance during photo taking. The ambient light sensor 180L may further cooperate with the optical proximity sensor 180G to detect whether the electronic device 100 is in a pocket, so as to prevent an accidental touch.

The fingerprint sensor 180H is configured to collect a fingerprint. The electronic device 100 may implement fingerprint unlock, application lock accessing, fingerprint photographing, fingerprint-based call answering, and the like by using a feature of the collected fingerprint.

The temperature sensor 180J is configured to detect a temperature.

The touch sensor 180K is also referred to as a "touch device". The touch sensor 180K may be disposed on the display screen 194. The touch sensor 180K and the display screen 194 form a touchscreen, which is also referred to as a "touchscreen". The touch sensor 180K is configured to detect a touch operation performed on or near the touch sensor 180K. The touch sensor may transmit the detected touch operation to the application processor, to determine a touch event type. The touch sensor 180K may provide a visual output related to the touch operation by using the display screen 194. In some other embodiments, the touch sensor 180K may be alternatively disposed on a surface of the electronic device 100, and is located on a position different from that of the display screen 194. In some embodiments of this application, a target paste application may be determined based on a touch operation of a user on the touch sensor 180K.

The bone conduction sensor 180M may obtain a vibration signal. In some embodiments, the bone conduction sensor 180M may obtain a vibration signal of a vibration bone of a human vocal-cord part. The bone conduction sensor 180M may alternatively contact a human pulse, and receive a blood pressure beating signal. In some embodiments, the bone conduction sensor 180M may alternatively be disposed in a headset, to form a bone conduction headset. The audio module 170 may obtain a speech signal through parsing based on the vibration signal, of the vibration bone of the vocal-cord part, that is obtained by the bone conduction sensor 180M, to implement a speech function. The application processor may parse heart rate information based on the blood pressure pulse signal obtained by the bone conduction sensor 180M, to implement a heart rate detection function.

The key 190 includes a power key, a volume key, and the like. The key 190 may be a mechanical key, or a touch key. The electronic device 100 may receive a key input, and generate a key signal input related to user setting and function control of the electronic device 100.

The motor 191 may generate a vibration prompt. The motor 191 may be configured to provide a vibration prompt for an incoming call, and may be further configured to provide a touch vibration feedback. For example, touch operations performed on different applications (for example, photo taking and audio playing) may correspond to different vibration feedback effects. The motor 191 may also correspond to different vibration feedback effects for touch operations applied to different areas of the display screen 194. Different application scenarios (for example, a time prompt, information receiving, an alarm clock, and a game) may also correspond to different vibration feedback effects. A touch vibration feedback effect may be further customized.

The indicator 192 may be an indicator light, and may be configured to indicate a charging state or a battery change, or may be further configured to indicate a message, a missed call, a notification, or the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support 1 or N SIM card interfaces, N being a positive integer greater than 1. The SIM card interface 195 can support a nano SIM card, a micro SIM card, a SIM card, and the like. A plurality of cards may be simultaneously inserted into the same SIM card interface 195. Types of the plurality of cards may be the same or different. The SIM card interface 195 may be compatible with different types of SIM cards. The SIM card interface 195 may also be compatible with an external memory card. The electronic device 100 interacts with a network by using a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

An embodiment further provides a computer storage medium. The computer storage medium stores computer instructions. When the computer instructions are run on an electronic device 100, the electronic device 100 is enabled to perform the foregoing related method steps to implement the data transmission management method in the foregoing embodiments.

This embodiment further provides a computer program product (not encompassed by the wording of the claims). When the computer program product is run on a computer, the computer is enabled to perform the foregoing related steps to implement the data transmission management method in the foregoing embodiments.

In addition, an embodiment not encompassed by the wording of the claims further provides an apparatus. The apparatus may be specifically a chip, a component, or a module. The apparatus may include a processor and a memory that are connected. The memory is configured to store computerexecutable instructions. When the apparatus runs, the processor may execute the computerexecutable instructions stored in the memory, to cause the chip to perform the data transmission management method in the foregoing method embodiments.

The electronic device, the computer storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or part of the functions described above.

In the several embodiments provided in this application, it should be understood that the disclosed apparatus and method may be implemented in other manners. For example, the described apparatus embodiment is merely exemplary. For example, the module or unit division is merely a logical function division and may be other division during actual implementations. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in multiple different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in the form of hardware, or may be implemented in the form of a software function unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended to describe the technical solutions of this application, but are not intended to limit this application. The scope of the technical solutions is defined by the independent claims.

## Claims

1. A data transmission management method, performed by a first electronic device (10), wherein a first link being a Wi-Fi link exists between the first electronic device (10) and a wireless access point (30), and the method comprises:
determining, in response to a user operation triggering a multi-screen collaboration, a second electronic device (20) that performs data transmission with the first electronic device (10), wherein a second link being a Wi-Fi link exists between the second electronic device (20) and the wireless access point (30);
establishing a third link being a P2P link and configured to perform data transmission with the second electronic device (20); and
when the first electronic device (10) does not have a first capability, wherein the first capability is a dual band dual concurrent capability, and the second electronic device (20) has the first capability, or when neither the first electronic device (10) nor the second electronic device (20) has the first capability and a theoretical peak rate of the second electronic device (20) is greater than a theoretical peak rate of the first electronic device (10), establishing a fourth link being a Wi-Fi link and connected to the second electronic device (20) and disconnecting the first link, wherein the second electronic device (20) provides a wireless communication network to the first electronic device (10) through the fourth link, wherein the second electronic device (20) is used as a soft access point, soft-AP; and
when the first electronic device (10) has the first capability and the second electronic device (20) does not have the first capability, or when neither the first electronic device (10) nor the second electronic device (20) has the first capability and the theoretical peak rate of the second electronic device (20) is less than the theoretical peak rate of the first electronic device (10), establishing the fourth link connected to the second electronic device (20) and maintaining the first link, wherein the first electronic device (10) provides a wireless communication network to the second electronic device (20) through the fourth link, and the first electronic device (10) is used as the soft-AP; and
a frequency band in which the third link is located is different from a preset frequency band, and at least one frequency band of a frequency band in which the first link is located and a frequency band in which the second link is located is the preset frequency band.

2. The data transmission management method according to claim 1, wherein that there is no first capability comprises performing transmission in a dual band adaptive concurrent manner.

3. The data transmission management method according to claim 1, wherein the preset frequency band is 2.4 GHz, and the frequency band in which the third link is located is 5 GHz.

4. The data transmission management method according to any one of claims 1 to 3, wherein after the establishing a fourth link connected to the second electronic device (20) and disconnecting the first link, the method further comprises: if the frequency band in which the second link is located is the same as the frequency band in which the third link is located and a channel on which the second link works is different from a channel on which the third link works, switching the channel on which the second link works, wherein a switched channel of the second link is the same as the channel of the third link.

5. The data transmission management method according to claim 4, wherein the method further comprises: determining the second electronic device (20) as a group owner, wherein the group owner is configured to initiate switching of the channel on which the second link works.

6. The data transmission management method according to any one of claims 1 to 5, wherein after the establishing a fourth link connected to the second electronic device (20) and maintaining the first link, the method further comprises: if the frequency band in which the first link is located is the same as the frequency band in which the third link is located and a channel on which the first link works is different from a channel on which the third link works, switching the channel on which the first link works, wherein a switched channel of the first link is the same as the channel of the third link.

7. The data transmission management method according to claim 6, wherein the method further comprises: determining the first electronic device (10) as a group owner, wherein the group owner is configured to initiate switching of the channel on which the first link works.

8. A first electronic device (100), comprising a memory (121) and a processor (110), wherein
the memory (121) is configured to store program instructions; and
the processor (110) is configured to read the program instructions stored in the memory (121), to implement the data transmission management method according to any one of claims 1 to 7.

9. A computer-readable storage medium, having computer-readable instructions stored therein, wherein the computer-readable the instructions, when executed by a processor (110), implement the data transmission management method according to any one of claims 1 to 7.

## Patentansprüche

1. Ein Verfahren zur Verwaltung der Datenübertragung, durchgeführt von einer ersten elektronischen Vorrichtung (10), wobei eine erste Verbindung zwischen der ersten elektronischen Vorrichtung (10) und einem drahtlosen Zugangspunkt (30) als WLAN-Verbindung existiert, und das Verfahren umfasst:
Bestimmen, als Reaktion auf eine Benutzeraktion, die eine Multi-Screen-Kollaboration auslöst, einer zweiten elektronischen Vorrichtung (20), die Datenübertragung mit der ersten elektronischen Vorrichtung (10) durchführt, wobei eine zweite Verbindung zwischen der zweiten elektronischen Vorrichtung (20) und dem drahtlosen Zugangspunkt (30) als WLAN-Verbindung existiert;
Aufbauen einer dritten Verbindung, die eine P2P-Verbindung ist und für die Datenübertragung mit der zweiten elektronischen Vorrichtung (20) konfiguriert ist; und
Wenn die erste elektronische Vorrichtung (10) nicht über die erste Fähigkeit verfügt, wobei die erste Fähigkeit die Dualband-Dual-Simultan-Fähigkeit ist, und die zweite elektronische Vorrichtung (20) diese erste Fähigkeit besitzt, oder wenn weder die erste elektronische Vorrichtung (10) noch die zweite elektronische Vorrichtung (20) diese erste Fähigkeit besitzt und die theoretische Spitzenrate der zweiten elektronischen Vorrichtung (20) größer ist als die der ersten elektronischen Vorrichtung (10), eine vierte Verbindung als WLAN-Verbindung herstellen, die mit der zweiten elektronischen Vorrichtung (20) verbunden ist, und die erste Verbindung trennen, wobei die zweite elektronische Vorrichtung (20) über die vierte Verbindung ein drahtloses Kommunikationsnetzwerk für die erste elektronische Vorrichtung (10) bereitstellt, wobei die zweite elektronische Vorrichtung (20) als Soft Access Point (Soft-AP) verwendet wird; und
Wenn die erste elektronische Vorrichtung (10) die erste Fähigkeit besitzt und die zweite elektronische Vorrichtung (20) diese nicht besitzt, oder wenn weder die erste elektronische Vorrichtung (10) noch die zweite elektronische Vorrichtung (20) diese Fähigkeit besitzt und die theoretische Spitzenrate der zweiten elektronischen Vorrichtung (20) kleiner ist als die der ersten elektronischen Vorrichtung (10), die vierte Verbindung herstellen, welche mit der zweiten elektronischen Vorrichtung (20) verbunden ist, und die erste Verbindung aufrechterhalten, wobei die erste elektronische Vorrichtung (10) über die vierte Verbindung ein drahtloses Kommunikationsnetzwerk für die zweite elektronische Vorrichtung (20) bereitstellt und die erste elektronische Vorrichtung (10) als Soft-AP verwendet wird; und
Ein Frequenzband, in dem sich die dritte Verbindung befindet, ist ein anderes als ein voreingestelltes Frequenzband, und mindestens ein Frequenzband entweder der ersten oder der zweiten Verbindung ist das voreingestellte Frequenzband.

2. Das Verfahren zur Verwaltung der Datenübertragung nach Anspruch 1, wobei das Fehlen der ersten Fähigkeit das Durchführen der Übertragung im dualband-adaptiven parallelen Modus umfasst.

3. Datenübertragungsverwaltungsverfahren gemäß Anspruch 1, wobei das voreingestellte Frequenzband 2,4 GHz beträgt und das Frequenzband, in dem sich die dritte Verbindung befindet, 5 GHz beträgt.

4. Datenübertragungsverwaltungsverfahren gemäß einem der Ansprüche 1 bis 3, wobei nach der Herstellung einer vierten Verbindung mit dem zweiten elektronischen Gerät (20) und dem Trennen der ersten Verbindung das Verfahren weiterhin umfasst: Falls das Frequenzband, in dem sich die zweite Verbindung befindet, dasselbe ist wie das Frequenzband, in dem sich die dritte Verbindung befindet, und sich der Kanal, auf dem die zweite Verbindung arbeitet, von dem Kanal der dritten Verbindung unterscheidet, das Umschalten des Kanals, auf dem die zweite Verbindung arbeitet, wobei der umgeschaltete Kanal der zweiten Verbindung derselbe ist wie der Kanal der dritten Verbindung.

5. Datenübertragungsverwaltungsverfahren gemäß Anspruch 4, wobei das Verfahren weiterhin umfasst: das zweite elektronische Gerät (20) als Gruppeneigentümer zu bestimmen, wobei der Gruppeneigentümer dafür konfiguriert ist, das Umschalten des Kanals, auf dem die zweite Verbindung arbeitet, einzuleiten.

6. Datenübertragungsverwaltungsverfahren gemäß einem der Ansprüche 1 bis 5, wobei nach der Herstellung einer vierten Verbindung mit dem zweiten elektronischen Gerät (20) und der Beibehaltung der ersten Verbindung das Verfahren weiterhin umfasst: Falls das Frequenzband, in dem sich die erste Verbindung befindet, dasselbe ist wie das Frequenzband, in dem sich die dritte Verbindung befindet, und sich der Kanal, auf dem die erste Verbindung arbeitet, von dem Kanal der dritten Verbindung unterscheidet, das Umschalten des Kanals, auf dem die erste Verbindung arbeitet, wobei der umgeschaltete Kanal der ersten Verbindung derselbe ist wie der Kanal der dritten Verbindung.

7. Datenübertragungsverwaltungsverfahren gemäß Anspruch 6, wobei das Verfahren weiterhin umfasst: das erste elektronische Gerät (10) als Gruppeneigentümer zu bestimmen, wobei der Gruppeneigentümer dafür konfiguriert ist, das Umschalten des Kanals, auf dem die erste Verbindung arbeitet, einzuleiten.

8. Erstes elektronisches Gerät (100), umfassend einen Speicher (121) und einen Prozessor (110), wobei
der Speicher (121) dafür konfiguriert ist, Programmanweisungen zu speichern; und
der Prozessor (110) dafür konfiguriert ist, die im Speicher (121) gespeicherten Programmanweisungen zu lesen, um das Datenübertragungsverwaltungsverfahren gemäß einem der Ansprüche 1 bis 7 auszuführen.

9. Ein computerlesbares Speichermedium, das computerlesbare Anweisungen enthält, wobei die computerlesbaren Anweisungen, wenn sie von einem Prozessor (110) ausgeführt werden, das Datenübertragungsverwaltungsverfahren gemäß einem der Ansprüche 1 bis 7 implementieren.

## Revendications

1. Procédé de gestion de la transmission de données, exécuté par un premier dispositif électronique (10), dans lequel un premier lien étant un lien Wi-Fi existe entre le premier dispositif électronique (10) et un point d'accès sans fil (30), et le procédé comprend :
déterminer, en réponse à une opération utilisateur déclenchant une collaboration multiécrans, un second dispositif électronique (20) qui effectue une transmission de données avec le premier dispositif électronique (10), un second lien étant un lien Wi-Fi entre le second dispositif électronique (20) et le point d'accès sans fil (30) ;
établir un troisième lien étant un lien P2P et configuré pour effectuer une transmission de données avec le second dispositif électronique (20) ; et
lorsque le premier dispositif électronique (10) ne possède pas une première capacité, ladite première capacité étant la capacité double bande double simultanée, et que le second dispositif électronique (20) possède cette première capacité, ou lorsque ni le premier dispositif électronique (10) ni le second dispositif électronique (20) ne possèdent la première capacité et que le débit maximal théorique du second dispositif électronique (20) est supérieur à celui du premier dispositif électronique (10), établir un quatrième lien étant un lien Wi-Fi connecté au second dispositif électronique (20) et déconnecter le premier lien, le second dispositif électronique (20) fournissant alors un réseau de communication sans fil au premier dispositif électronique (10) via le quatrième lien, le second dispositif électronique (20) étant utilisé comme point d'accès logiciel, soft-AP ; et
lorsque le premier dispositif électronique (10) possède la première capacité et que le second dispositif électronique (20) ne possède pas la première capacité, ou lorsque ni le premier dispositif électronique (10) ni le second dispositif électronique (20) ne possèdent la première capacité et que le débit maximal théorique du second dispositif électronique (20) est inférieur à celui du premier dispositif électronique (10), établir le quatrième lien connecté au second dispositif électronique (20) et maintenir le premier lien, le premier dispositif électronique (10) fournissant alors un réseau de communication sans fil au second dispositif électronique (20) via le quatrième lien, et le premier dispositif électronique (10) étant utilisé comme soft-AP ; et
une bande de fréquence dans laquelle se situe le troisième lien est différente d'une bande de fréquence prédéfinie et au moins une bande de fréquence parmi celle dans laquelle se situe le premier lien et celle dans laquelle se situe le second lien est la bande de fréquence prédéfinie.

2. Le procédé de gestion de transmission de données selon la revendication 1, dans lequel l'absence de première capacité comprend la transmission en mode double bande adaptatif simultané.

3. Le procédé de gestion de transmission de données selon la revendication 1, dans lequel la bande de fréquence prédéfinie est de 2,4 GHz, et la bande de fréquence dans laquelle se trouve le troisième lien est de 5 GHz.

4. Le procédé de gestion de transmission de données selon l'une quelconque des revendications 1 à 3, dans lequel après l'établissement d'un quatrième lien connecté au second dispositif électronique (20) et la déconnexion du premier lien, le procédé comprend en outre : si la bande de fréquence dans laquelle se trouve le second lien est identique à celle dans laquelle se trouve le troisième lien et qu'un canal sur lequel fonctionne le second lien est différent de celui sur lequel fonctionne le troisième lien, effectuer un changement de canal du second lien, le canal commuté du second lien étant alors le même que celui du troisième lien.

5. Le procédé de gestion de transmission de données selon la revendication 4, dans lequel le procédé comprend en outre : déterminer le second dispositif électronique (20) comme propriétaire de groupe, le propriétaire de groupe étant configuré pour initier le changement de canal sur lequel fonctionne le second lien.

6. Le procédé de gestion de transmission de données selon l'une quelconque des revendications 1 à 5, dans lequel après l'établissement d'un quatrième lien connecté au second dispositif électronique (20) et le maintien du premier lien, le procédé comprend en outre : si la bande de fréquence dans laquelle se trouve le premier lien est identique à celle dans laquelle se trouve le troisième lien et qu'un canal sur lequel fonctionne le premier lien est différent de celui sur lequel fonctionne le troisième lien, effectuer un changement de canal du premier lien, le canal commuté du premier lien étant alors le même que celui du troisième lien.

7. Le procédé de gestion de transmission de données selon la revendication 6, dans lequel le procédé comprend en outre : déterminer le premier dispositif électronique (10) comme propriétaire de groupe, le propriétaire de groupe étant configuré pour initier le changement de canal sur lequel fonctionne le premier lien.

8. Un premier dispositif électronique (100), comprenant une mémoire (121) et un processeur (110), dans lequel
la mémoire (121) est conçue pour stocker des instructions de programme ; et
le processeur (110) est conçu pour lire les instructions de programme stockées dans la mémoire (121), afin de mettre en œuvre le procédé de gestion de transmission de données selon l'une quelconque des revendications 1 à 7.

9. Un support de stockage lisible par ordinateur, comportant des instructions lisibles par ordinateur stockées en son sein, lesdites instructions, lorsqu'elles sont exécutées par un processeur (110), mettant en œuvre le procédé de gestion de transmission de données selon l'une quelconque des revendications 1 à 7.
